# EUROPÄISCHE PATENTANMELDUNG

(11) **EP 4 336 644 A1**
(43) Veröffentlichungstag der Anmeldung: **13.03.2024**
(21) Anmeldenummer: 22205059.3
(22) Anmeldetag: 02.11.2022
(51) Int. Cl.: H01M 50/528, H01M 50/107, H01M 50/179, H01M 50/188, H01M 50/533, H01M 50/56, H01M 50/566, H01M 10/054, H01M 10/0587, H01M 10/0585

(54) **ENERGIESPEICHERELEMENT UND BATTERIE**

(30) Priorität: 07.09.2022 EP 22194400
(71) Anmelder: VARTA Microbattery GmbH, 73479 Ellwangen Jagst (DE)
(72) Erfinder: Ensling, David, 73479 Ellwangen (DE); Pytlik, Edward, 73479 Ellwangen (DE)
(74) Vertreter: Ostertag & Partner Patentanwälte mbB

(57) **Zusammenfassung**

Ein sekundäres Energiespeicherelement (100) umfasst als Elektroden eine Kathode (108) und eine Anode (105), die Teile eines Verbundkörpers (104) sind, in dem sie, getrennt durch eine Separator- oder Festelektrolytschicht (116), in der Sequenz Kathode (108) / Separator- oder Festelektrolytschicht (116) / Anode (105) vorliegen. Die Kathode (108) umfasst einen Kathodenstromkollektor (109) und ein positives Elektrodenmaterial (110), die Anode (105) einen Anodenstromkollektor (106) und ein negatives Elektrodenmaterial (107). Der Kathodenstromkollektor (109) weist einen Hauptbereich, der beidseitig mit einer Schicht aus dem positiven Elektrodenmaterial (110) beladen ist, sowie einen freien Randstreifen (109b), der sich entlang eines Rands des Kathodenstromkollektors (109) erstreckt und der nicht mit dem positiven Elektrodenmaterial (110) beladen ist, auf. Alternativ oder gleichzeitig weist der Anodenstromkollektor (106) einen Hauptbereich, der beidseitig mit einer Schicht aus dem negativen Elektrodenmaterial (107) beladen ist, sowie einen freien Randstreifen (106b), der sich entlang eines Rands des Anodenstromkollektors (106) erstreckt und der nicht mit dem negativen Elektrodenmaterial (107) beladen ist, auf. Die Kathode (108) und die Anode (105) sind derart ausgebildet und/oder innerhalb des Verbundkörpers (104) derart zueinander angeordnet, dass der freie Randstreifen (109b) des Kathodenstromkollektors (109) aus einer Seite (104b) des Verbundkörpers (104) und/oder derfreie Randstreifen (106b) des Anodenstromkollektors (106) aus einer anderen Seite (104a) des Verbundkörpers (104) austritt. Das Energiespeicherelement umfasst ein erstes Kontaktmetallblech (112), das mit einem der freien Randstreifen (106b) in unmittelbarem Kontakt steht, und/oder ein zweites Kontaktmetallblech (109a), das mit dem anderen der freien Randstreifen (109b) in unmittelbarem Kontakt steht. Die Elektroden (105, 108) umfassen hierbei mindestens einen lonentyp aus der Gruppe mit Natriumionen, Kaliumionen, Calciumionen, Magnesiumionen und Aluminiumionen, welche beim Laden und Entladen des sekundären Energiespeicherelements (100) zwischen der Kathode (108) und der Anode (105) ausgetauscht werden.

## Beschreibung

Die Erfindung betrifft ein Energiespeicherelement, das sich zur Bereitstellung sehr hoher Ströme eignet, sowie ein Verfahren zur Herstellung eines solchen Energiespeicherelements.

### Anwendungsgebiet und Stand der Technik

Elektrochemische Energiespeicherelemente sind dazu in der Lage, gespeicherte chemische Energie durch eine Redoxreaktion in elektrische Energie umzuwandeln. Eine der einfachsten Formen eines elektrochemischen Energiespeicherelements ist die elektrochemische Zelle. Sie umfasst eine positive und eine negative Elektrode, die beispielsweise von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird meist durch einen ionenleitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherelemente heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektorfür die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen in der Regel Lösungen von Lithiumsalzen wie Lithiumhexafluorophosphat (LiPF6) in organischen Lösungsmitteln (z. B. Ether und Ester der Kohlensäure).

Die Kompositelektroden werden bei der Herstellung einer Lithium-Ionen-Zelle mit einem oder mehreren Separatoren zu einem Verbundkörper kombiniert. Hierbei werden die Elektroden und Separatoren meist unter Druck, gegebenenfalls auch durch Lamination oder durch Verklebung, miteinander kombiniert. Die grundsätzliche Funktionsfähigkeit der Zelle kann dann durch Tränkung des Verbunds mit dem Elektrolyten hergestellt werden.

In vielen Ausführungsformen wird der Verbundkörper in Form eines Wickels gebildet oder zu einem Wickel verarbeitet. Alternativ kann es sich bei dem Verbundkörper auch um einen Stapel aus Elektroden handeln.

Analog zu Lithium-Ionen-Zellen lassen sich auch Natrium-Ionen-Zellen, welche das Alkalimetall Natrium in Form von Na-Ionen verwenden, Kalium-Ionen-Zellen, welche das Alkalimetall Kalium in Form von Kaliumionen verwenden, Calcium-Ionen-Zellen, welche das Erdalkalimetall Calcium in Form von Calciumionen verwenden, Magnesium-Ionen-Zellen, welche das Erdalkalimetall Magnesium in Form von Magnesiumionen verwenden und Aluminium-Ionen-Zellen, welche das Aluminium in Form von Aluminiumionen verwenden, herstellen. Die Aufbau der Kompositelektroden und deren Weiterverarbeitung kann für Zellen mitdiesen alternativen Zellchemien grundsätzlich 1:1 übernommen werden, wobei auf die jeweilige Zellchemie abgestimmte Stromkollektormaterialien, Elektrodenmaterialien, Elektrolyte und Separatoren zum Einsatz kommen.

Insbesondere Natrium-Ionen-Zellen haben in der Zwischenzeit Praxistauglichkeit erreicht. Im Vergleich zur Lithium-Ionen-Technik wird die Herstellung von Natrium-Ionen-Zellen nicht durch knappe Ressourcen begrenzt. Sie weisen allerdings im Mittel eine geringere Energiedichte als Lithium-Ionen-Zellen auf.

Aufgrund ihrer hohen Energiedichte sind Lithium-Ionen-Zellen vor allem als Energiequelle für Elektromotoren im Automobilbereich aber auch für E-Bikes oder andere Anwendungen mit hohem Energiebedarf, z.B. für Elektrowerkzeuge, geeignet. Dafür werden Lithium-Ionen-Zellen benötigt, die dafür optimiert sind, mit hohen Strömen beim Laden und Entladen belastet zu werden.

Klassisch werden die Elektroden insbesondere von gewickelten Verbundkörpern über Metallstreifen (Tabs) kontaktiert, die durch Verschweißung mit den Stromkollektoren verbunden sind und stirnseitig aus den gewickelten Verbundkörpern herausragen, wie dies beispielsweise in den Figuren 1 und 2 der US 2005/0277019 A1 dargestellt ist. Dies kann beim Auftreten hoher Ströme nachteihaft sein. Sowohl die genannten Tabs als auch die elektrochemisch aktiven Komponenten von herkömmlichen Lithium-Ionen Zellen besitzen eine begrenzte Hochstromfähigkeit, insbesondere in Laderichtung und bei tiefen Temperaturen (< 10 °C). Es treten sowohl elektrische als auch thermische Gradienten auf. Auch mechanisch werden gewickelte Verbundkörper durch die Tabs gestört, was zu ungünstigen Druckverhältnissen führen kann.

Aus der WO 2017/215900 A1 sind zylindrische Lithium-Ionen-Zellen bekannt, bei denen ein Verbundkörper aus bandförmigen Elektroden gebildet ist und in Form eines Wickels vorliegt. Die Elektroden weisen jeweils mit Elektrodenmaterial beladene Stromkollektoren auf. Entgegengesetzt gepolte Elektroden sind innerhalb des Verbundkörpers versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weist die Zelle an Stelle von Tabs Kontaktplatten auf, die auf den Stirnseiten des Wickels aufsitzen und mit den Längsrändern der Stromkollektoren durch Verschweißung verbunden sind. Dadurch ist es möglich, die Stromkollektoren und damit auch die dazugehörigen Elektroden über ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen und auch Wärme kann besser aus dem Wickel abgeführt werden.

Ähnliche Zellkonstruktionen finden sich in der EP 3916841 A1, der EP 3916828 A1, der EP 3916827 A1, der EP 3916829 A1, der EP 3916870 A1, der EP 3916869 A1, der EP 3916877 A1, der EP 3965196 A1 und der EP 3916868 A1.

Als Starterbatterien für Kraftfahrzeuge mit Verbrennungsmotoren sowie für einige andere spezielle Anwendungsfälle haben sich Lithium-Ionen-Zellen am Markt bislang nicht durchsetzen können. Für diese Anwendungen kommen nach wie vor meist Bleiakkumulatoren zum Einsatz, bei denen die Elektroden aus Blei bzw. Bleidioxid und der Elektrolyt aus verdünnter Schwefelsäure bestehen. Bleiakkumulatoren können kurzzeitig starke Ströme liefern und sind auch bei tiefen Temperaturen performant. Darüber hinaus sind sie vergleichsweise kostengünstig zu produzieren.

Aus Umweltschutzgründen wäre ein Ersatz allerdings dringend geboten, da Blei ausgesprochen giftig ist. Obgleich für Batterien in vielen Ländern ein effizientes Pfandsystem existiert, ist die Freisetzung von Blei beim Bleierzabbau und derfolgenden Aufbereitungsowie auch beim Bleirecycling teilweise nur schwer zu vermeiden.

### Aufgabe und Lösung

Der vorliegenden Erfindung lag die Aufgabe zugrunde, Energiespeicherelemente bereitzustellen, die in ihrer Performance bei tiefen Temperaturen Bleiakkumulatoren nicht nachstehen, dabei aber günstigersind als Lithium-Ionen-Zellen und hohe Ströme beim Laden aufnehmen und beim Entladen abgeben können.

Diese Aufgabe wird durch das Energiespeicherelement mit den Merkmalen des unabhängigen Anspruchs 1 gelöst. Auch die Batterie mit den Merkmalen des Anspruchs 13 trägt zur Lösung der Aufgabe bei. Bevorzugte Ausführungsformen der Erfindung sind in den abhängigen Ansprüchen definiert.

### Erfindungsgemäßes Energiespeicherelement

Das erfindungsgemäße Energiespeicherelement weist stets die unmittelbar folgenden Merkmale a. bis g. auf:
a. Es umfasst als Elektroden eine Kathode und eine Anode, die Teile eines Verbundkörpers sind, in dem sie, getrennt durch eine Separator- oder Festelektrolytschicht, in der Sequenz Kathode / Separator- oder Festelektrolytschicht / Anode vorliegen,
b. die Kathode umfasst einen Kathodenstromkollektor und ein positives Elektrodenmaterial,
c. die Anode umfasst einen Anodenstromkollektor und ein negatives Elektrodenmaterial,
d. der Kathodenstromkollektor weist
   - einen Hauptbereich, der beidseitig mit einer Schicht aus dem positiven Elektrodenmaterial beladen ist, sowie
   - einen freien Randstreifen, der sich entlang eines Rands des Kathodenstromkollektors erstreckt und der nicht mit dem positiven Elektrodenmaterial beladen ist, auf, und/oder
      der Anodenstromkollektor weist
   - einen Hauptbereich, der beidseitig mit einer Schicht aus dem negativen Elektrodenmaterial beladen ist, sowie
   - einen freien Randstreifen, der sich entlang eines Rands des Anodenstromkollektors erstreckt und der nicht mit dem negativen Elektrodenmaterial beladen ist, auf,
e. die Kathode und die Anode sind derart ausgebildet und/oder innerhalb des Verbundkörpers derart zueinander angeordnet, dass der freie Randstreifen des Kathodenstromkollektors aus einer Seite des Verbundkörpers und/oder der freie Randstreifen des Anodenstromkollektors aus einer anderen Seite des Verbundkörpers austritt, und
f. das Energiespeicherelement umfasst ein erstes Kontaktmetallblech, das mit einem der freien Randstreifen in unmittelbarem Kontakt steht, und/oder ein zweites Kontaktmetallblech, das mit dem anderen der freien Randstreifen in unmittelbarem Kontakt steht,
   wobei
g. die Elektroden mindestens einen lonentyp aus der Gruppe mit Natriumionen, Kaliumionen, Calciumionen, Magnesiumionen und Aluminiumionen umfassen, welche beim Laden und Entladen des sekundären Energiespeicherelements zwischen der Kathode und der Anode ausgetauscht werden.

Bei dem erfindungsgemäßen Energiespeicherelement handelt es sich also in seiner einfachsten Ausführungsform um eine Natrium-Ionen-Zelle, eine Kalium-Ionen-Zelle, eine Calcium-Ionen-Zelle, eine Magnesium-Ionen-Zelle oder eine Aluminium-Ionen-Zelle. Unter diesen Varianten sind Energiespeicherelemente mit Natrium-Ionen-Zellchemie erfindungsgemäß besonders bevorzugt.

Beim Auftreten sehr hoher Ströme und/oder tiefen Temperaturen ist es essentiell, jegliche elektrische, thermische und ionische Gradienten in allen elektrochemisch aktiven Komponenten einer Zelle zu minimieren. Die Vermeidung von ohm'schen Verlusten spielt eine entscheidende Rolle. Möglichst niedrige Gradienten über den gesamten Verbundkörper inklusive des Elektrolytraums sind entscheidend für Lebensdauer und Stromtragfähigkeit.

Das erste und/oder das zweite Kontaktmetallblech gewährleistet eine homogene elektrische und thermische Anbindung der Elektroden des Verbundkörpers, im Falle eines gewickelten Verbundkörpers über ihre gesamte Länge, und führt damit zu einer Leistungsverbesserung sowie einer Erhöhung der Lebensdauer. Das Kontaktmetallblech ermöglicht den Verzicht auf Tabs zur Elektrodenkontaktierung. Entsprechend treten innerhalb von gewickelten Verbundköpern auch keine mechanischen Störungen auf, die bei thermomechanischer Beanspruchung zu Problemen führen können.

Überraschenderweise hat sich herausgestellt, dass die Konstruktion des erfindungsgemäßen Energiespeicherelements insbesondere für das Na-Ionen-System (aber auch für die anderen Post-Lithium-Systeme wie die erwähnten Systeme auf Basis von Natrium-Ionen, Kalium-Ionen, CalciumIonen, Magnesium-Ionen und Aluminium-Ionen eine besonders effizienteAnbindungder Elektroden ermöglicht. Hochleistungsfähige Na-Ionen Materialien können so mit einer Rate von bis zu 100 C geladen und entladen werden. Darüber hinaus können insbesondere Natrium-Ionen-Systeme auch resistent gegen Tiefentladungen gebaut werden.

### Energiespeicherelement mit gewickeltem Verbundkörper

Der Verbundkörper des erfindungsgemäßen Energiespeicherelements kann als Wickel ausgebildet sein oder als Stapel aus Elektroden. Bei der gewickelten Variante weist es die unmittelbar folgenden Merkmale a. bis e. auf:
a. Die Elektroden und die Stromkollektoren sowie die Schichten aus den Elektrodenmaterialien sind bandförmig ausgebildet,
b. Es umfasst mindestens einen bandförmigen Separator oder mindestens eine bandförmige Festelektrolytschicht,
c. der Verbundkörper liegt in Form eines Wickels vor, in dem die Elektroden und der mindestens eine Separator um eine Wickelachse herum aufgewickelt vorliegen, wobei der Verbundkörper eine erste und eine zweite endständige Stirnseite und einen Wickelmantel umfasst und der freie Randstreifen des Kathodenstromkollektors aus der ersten Stirnseite und/oder der freie Randstreifen des Anodenstromkollektors aus der zweiten Stirnseite austritt,
d. Es umfasst ein Gehäuse, insbesondere ein Metallgehäuse, umfassend einen Gehäusemantel oder Seitenwände und an den Stirnseiten einen Boden und einen Deckel, und
e. In dem Gehäuse ist der als Wickel ausgebildete Verbundkörper derart ausgerichtet, so dass der Wickelmantel an der Innenseite des Gehäusemantels oder den Seitenwänden anliegt.

Der bandförmige Separator bildet in dem Verbundkörper die Separatorschicht aus.

Der Verbundkörper umfasst in dieser Ausführungsform bevorzugt einen bandförmigen Separator o-derzwei bandförmige Separatoren, der oder die jeweils einen ersten und einen zweiten Längsrand sowie zwei Endstücke aufweisen.

Besonders bevorzugt sind der Wickel und das Gehäuse zylindrisch ausgebildet. Das Gehäuse weist dann bevorzugt einen umlaufenden Gehäusemantel sowie einen kreisförmigen Boden und Deckel auf. In dem zylindrischen Gehäuse ist der als zylindrischer Wickel ausgebildete Verbundkörper bevorzugt axial ausgerichtet.

Vorzugsweise liegen die Elektroden und der mindestens eine Separator spiralförmig um die Wickelachse herum aufgewickelt vor.

### Symmetrische und asymmetrische Wickelkontaktierung

Der Verbundkörper in Form des Wickels kann sowohl symmetrisch als auch asymmetrisch kontaktiert werden.

Unter symmetrischer Kontaktierung ist zu verstehen, dass
- die Kathode und die Anode des Energiespeicherelement derart ausgebildet und/oder innerhalb des Verbundkörpers derart zueinander angeordnet sind, dass der freie Randstreifen des Kathodenstromkollektors aus einer der Stirnseiten des Verbundkörpers und der freie Randstreifen des Anodenstromkollektors aus der anderen der Stirnseiten des Verbundkörpers austritt, und
- das Energiespeicherelement ein erstes Kontaktmetallblech, das mit einem der freien Randstreifen in unmittelbarem Kontakt steht, und ein zweites Kontaktmetallblech, das mit dem anderen der freien Randstreifen in unmittelbarem Kontakt steht, umfasst.

Beide Elektroden werden somit an den beiden Stirnseiten des Wickels über Kontaktmetallbleche kontaktiert.

Unter asymmetrischer Kontaktierung ist zu verstehen, dass
- die Kathode und die Anode des Energiespeicherelement derart ausgebildet und/oder innerhalb des Verbundkörpers derart zueinander angeordnet sind, dass entweder nur der freie Randstreifen des Kathodenstromkollektors oder nur der freie Randstreifen des Anodenstromkollektors aus einer der Stirnseiten des Verbundkörpers austritt, und
- das Energiespeicherelement nur ein Kontaktmetallblech umfasst, das mitdem aus dem Verbundkörper austretenden freien Randstreifen des Kathodenstromkollektors oder des Anodenstromkollektors in unmittelbarem Kontakt steht.

In dieser Ausführungsform wird somit nur eine der Elektroden an einer der beiden Stirnseiten des Verbundkörpers überein Kontaktmetallblech kontaktiert. An den Stromkollektor der anderen Elektrode ist bevorzugt mindestens ein metallischer Ableiterstreifen (Tab) fixiert, der aus der anderen der endständigen Stirnseiten des Verbundkörpers austritt.

Im Falle einer asymmetrischen Kontaktierung zeichnet sich das erfindungsgemäße Energiespeicherelement durch eines der unmittelbar folgenden Merkmale a. bis c. aus:
a. Der mindestens eine metallische Ableiterstreifen ist durch Verschweißung mit dem Deckel oder einem durch den Deckel geführten metallischen Pol verbunden, während der aus einer der Stirnseiten austretende freie Randstreifen an den Boden oder an ein unmittelbar auf dem Boden des Gehäuses aufsitzendes Metallblech geschweißt ist (Variante A),
   oder
b. der mindestens eine metallische Ableiterstreifen ist an den Boden geschweißt, während der aus einer der Stirnseiten austretende freie Randstreifen durch Verschweißung mit dem Deckel oder einem durch den Deckel geführten Pol verbunden ist (Variante B).
   oder
c. der mindestens eine metallische Ableiterstreifen ist an den Boden geschweißt, während der aus einer der Stirnseiten austretende freie Randstreifen durch Verschweißung mit einem durch den Deckel geführten Pol oder einem auf dem freien Randstreifen aufsitzenden Metallblech, das elektrisch an den Deckel oder den Pol gekoppelt ist, verbunden ist (Variante C).

Bei Variante B fungiert der Boden des Gehäuses als Kontaktmetallblech, was besonders vorteilhaft sein kann, da bei dieser Ausführungsform eine optimale Entwärmung der über den freien Randstreifen angekoppelten Elektrode erfolgen kann.

Von besonderem Vorteil ist es, wenn der Anodenstromkollektor gemäß Variante B unmittelbar mit dem Boden verbunden ist während der Kathodenstromkollektor über den Tab angebunden ist. Der Einsatz des Ableiterstreifens auf der zum Deckel zugewandten Stirnseite des Wickels bei gleichzeitiger Anbindung der Anode über den im Idealfall gesamten Längsrand ihres Stromkollektors kann volumetrische Vorteile bieten, die insbesondere bei energieoptimierten Zellen zum Tragen kommen. Gleichzeitig resultieren positive Effekte aus der hervorragenden Anbindung der Anode und damit eine verbesserte Leistung und Lebensdauer der erfindungsgemäßen Zelle. Insbesondere für eine verbesserte Schnellladefähigkeit ist möglichst homogene elektrische und thermische Anbindung der Anode von Vorteil. Gezieltzu erwähnen ist in diesem Zusammenhang, dass Natrium-Ionen-Elektrolyte im Vergleich zu Lithium-Pendants grundsätzlich höhere Leitfähigkeiten ausweisen und daher Vorteile in Bezug auf dicke bzw. hochbeladene Elektroden, Schnellladen (> 2 C) und Performance bei tiefen Temperaturen (< 0 °C) zum Tragen kommen.

### Bevorzugte Weiterbildungen des Energiespeicherelements mit gewickeltem Verbundkörper

Bei Energiespeicherelementen mit gewickeltem Verbundkörper liegen das oder die Kontaktmetallbleche bevorzugt flach auf der oder den beiden Stirnseiten auf, insbesondere derart, dass der oder die freien Randstreifen über ihre gesamte Länge mit den Kontaktmetallblechen in Kontakt stehen.

Besonders bevorzugt zeichnet sich das erfindungsgemäße Energiespeicherelement mit gewickeltem Verbundkörper durch das unmittelbar folgende Merkmal a. aus:
a. Das Metallgehäuse umfasst ein becherförmiges, zylindrisch ausgebildetes Gehäuseteil mit einer endständigen, bevorzugt kreisförmige Öffnung und einen Deckel, der die endständige Öffnung des becherförmig ausgebildeten Gehäuseteils verschließt.

Bei dem Deckel handelt es sich in vielen bevorzugten Ausführungsformen um ein Deckelbauteil aus mehreren Komponenten. Beispielsweise kann der Deckel eine Berstmembran umfassen und/oder mit einer CID-Funktion (CID = Current Interrupt Device) ausgestattet sein.

Bevorzugt weist der Deckel einen kreisförmigen Umfang auf und ist derart in der kreisförmigen Öffnung des becherförmig ausgebildeten Gehäuseteils angeordnet, dass der Rand entlang einer umlaufenden Kontaktzone an der Innenseite des becherförmig ausgebildeten Gehäuseteils anliegt, wobei der Rand des Deckels mit dem becherförmig ausgebildeten Gehäuseteil über eine umlaufende Schweißnaht verbunden ist. In diesem Fall weisen die beiden Gehäuseteile bevorzugt die gleiche Polarität auf, sind also elektrisch entweder mit einer positiven oder einer negativen Elektrode gekoppelt. Das Gehäuse umfasst in diesem Fall noch eine Poldurchführung, die zur elektrischen Kontaktierung der nicht elektrisch mit dem Gehäuse verbundenen Elektrode dient.

In einer alternativen Ausführungsform ist auf den Rand des Deckels eine elektrisch isolierende Dichtung aufgezogen, die den Deckel von dem becherförmigen Gehäuseteil elektrisch trennt. In diesem Fall ist das Gehäuse meist durch einen Crimp-Verschluss abgedichtet.

Bevorzugt liegt die Höhe als zylindrische Rundzelle ausgebildeter Energiespeicherelemente im Bereich von 50 mm bis 150 mm. Der Durchmesser der zylindrischen Rundzellen liegt bevorzugt im Bereich von 15 mm bis 100 mm.

Der Anodenstromkollektor, der Kathodenstromkollektor und der Separator oder die Separatoren bzw. die Festelektrolytschicht weisen in Ausführungsformen, bei denen das erfindungsgemäße Energiespeicherelement eine zylindrische Rundzelle ist, bevorzugt die folgenden Dimensionen auf:
- Eine Länge im Bereich von 0,5 m bis 25 m
- Eine Breite im Bereich 30 mm bis 145 mm

Die Kontaktmetallbleche weisen in dieser Ausführungsform bevorzugt eine kreisförmige Grundform auf.

### Prismatische Ausführungsform

In der prismatischen Ausführungsform zeichnet sich das erfindungsgemäße Energiespeicherelement durch die unmittelbar folgenden Merkmale a. bis c., besonders bevorzugt durch die unmittelbar folgenden Merkmale a. bis d., aus:
a. Der Verbundkörper liegt in Form eines prismatischen Stapels vor, in dem die Kathode und die Anode gemeinsam mit weiteren Kathoden und Anoden gestapelt vorliegen.
b. Die Elektroden und die Stromkollektoren sowie die Schichten aus den Elektrodenmaterialien sind polygonal, insbesondere rechteckig, ausgebildet.
c. Es umfasst mindestens einen bandförmigen oder polygonalen, insbesondere rechteckigen, Separator oder mindestens einen bandförmigen oder polygonalen, insbesondere rechteckigen, Festelektrolyten,
d. Der Stapel ist von einem prismatischen Gehäuse umschlossen.

In dem Stapel sind benachbarte entgegengesetzt gepolte Elektroden stets voneinander durch eine Separator- oder Festelektrolytschicht getrennt.

Das prismatische Gehäuse setzt sich bevorzugt aus einem becherförmigen Gehäuseteil mit einer endständigen Öffnung und einem Deckel zusammen. Der Boden des becherförmigen Gehäuseteils und der Deckel weisen in dieser Ausführungsform bevorzugt eine polygonale, besonders bevorzugt eine rechteckige Grundfläche, auf. Die Form der endständigen Öffnung des becherförmigen Gehäuseteils entspricht der Form des Bodens und des Deckels. Darüber hinaus umfasst das Gehäuse mehrere, bevorzugt vier, rechteckige Seitenteile, die den Boden und den Deckel miteinander verbinden.

Die Separatorschichten können von mehreren Separatoren gebildet werden, die jeweils zwischen benachbarten Elektroden angeordnet sind. Es ist aber auch möglich, dass ein bandförmiger Separator die Elektroden des Stapels voneinander separiert. Im Falle mehrerer Separatoren zwischen den Anoden und Kathoden weisen die Separatoren bevorzugt ebenfalls eine polygonale, insbesondere rechteckige, Grundfläche auf.

Die Kontaktmetallbleche weisen in dieser Ausführungsform bevorzugt eine rechteckige Grundform auf.

In einigen bevorzugten Varianten der prismatischen Ausführungsform zeichnet sich das erfindungsgemäße Energiespeicherelement durch mindestens eines der unmittelbar folgenden Merkmale a. und b. aus:
a. Die freien Randstreifen der Kathodenstromkollektoren der Kathoden des Stapels treten aus einer Seite des Stapels aus und stehen mit dem ersten Kontaktmetallblech in unmittelbarem Kontakt.
b. Die freien Randstreifen der Anodenstromkollektoren der Anoden des Stapels treten aus einer anderen Seite des Stapels aus und stehen mit dem zweiten Kontaktmetallblech in unmittelbarem Kontakt. Bevorzugt sind die unmittelbar vorstehenden Merkmale a. und b. in Kombination miteinander realisiert.

In weiteren bevorzugten Varianten der prismatischen Ausführungsform zeichnet sich das erfindungsgemäße Energiespeicherelement durch mindestens eines der unmittelbar folgenden Merkmale a. und b. aus:
a. Die freien Randstreifen der Kathodenstromkollektoren sind parallel zueinander angeordnet.
b. Die freien Randstreifen der Anodenstromkollektoren sind parallel zueinander angeordnet.
Bevorzugt sind die unmittelbar vorstehenden Merkmale a. und b. in Kombination miteinander realisiert.

### Bevorzugte elektrochemische Ausführungsform und Elektrolyt

In einer weiteren besonders bevorzugten Ausführungsform der Erfindung zeichnet sich das erfindungsgemäße Energiespeicherelement durch eines der folgenden Merkmale aus:
a. Das Energiespeicherelement ist eine Natrium-Ionen-Zelle.
b. Das Energiespeicherelement umfasst eine Natrium-Ionen-Zelle.
c. Das Energiespeicherelement umfasst einen der folgenden Elektrolyten:
   - NaClO₄ gelöst in mindestens einem organischen Lösungsmittel, insbesondere in PC oder in einer Carbonatmischung aus der Gruppe mit EC/DEC/FEC und PC/FEC.
      Die Konzentration des NaClO₄ im Elektrolyten beträgt bevorzugt 0,3 - 5 M, besonders bevorzugt 0,7 M - 1,7 M.
      Bei einer Mischung EC/DEC/FEC sind die drei Komponenten bevorzugt in einem Volumenverhältnis im Bereich von 1:2 bis 2:1, insbesondere von 1: 1: 0.5, im Elektrolyten enthalten.
      Im Falle einer Mischung umfassend EC/DEC sind die Komponenten bevorzugt in einem Volumenverhältnis im Bereich von 1:2 bis 2:1 im Elektrolyten enthalten.
   - NaPF6 und/oder NaTFSI (Natrium-bis(trifluoromethansulfonyl)imid) gelöst in mindestens einem organischen Lösungsmittel, insbesondere in PC oder in einer Carbonatmischung aus der Gruppe mit EC/DEC/FEC, EC/PC, EC/DEC, FEC/EMC und PC/FEC oder in einer Ethermischung wie THF/mTHF.
      Die Konzentration des NaPF₆ und/oder des NaTFSI im Elektrolyten beträgt bevorzugt 0,3 - 5 M, besonders bevorzugt 0,7 M - 1,7 M.
      Bei einer Mischung EC/PC sind die zwei Komponenten bevorzugt in einem Volumenverhältnis im Bereich von 1:2 bis 2:1 im Elektrolyten enthalten.
      Bei einer Mischung EC/DEC sind die zwei Komponenten bevorzugt in einem Volumenverhältnis im Bereich von 1:2 bis 2:1 im Elektrolyten enthalten.
      Bei einer Mischung FEC/EMC sind die zwei Komponenten bevorzugt in einem Volumenverhältnis im Bereich von 1:2 bis 2:1, insbesondere in einem Verhältnis von 3:7, im Elektrolyten enthalten.
      Gegebenenfalls ist im Elektrolyten ein Zusatz von bis zu 10 % FEC enthalten.
   - NaFSI und/oder NaTFSI und/oder NaTDI gelöst in mindestens einem organischen Lösungsmittel, insbesondere in 1,4-Dioxan (DX) und/oder 1,3-Dioxolan (DOL) und/oder Dimethylether (DME).
      Die Konzentration des NaFSI und/oder des NaTFSI und/oder des NaTDI im Elektrolyten beträgt bevorzugt 0,3 - 5 M, besonders bevorzugt 0,7 M - 1,7 M.
   - NaFSI und/oder NaTFSI und/oder NaTDI gelöst in mindestens einem organischen Lösungsmittel, insbesondere in Dimethylcarbonat (DX) und/oder Tris(2,2,2-trifluoro-ethyl)phosphat (TFP).
      Die Konzentration des des NaFSI und/oder des NaTFSI und/oder des NaTDI im Elektrolyten beträgt bevorzugt 0,5 - 2,5 M, besonders bevorzugt 1 M - 2 M.
      Bei einer Mischung EC/PC sind die Komponenten bevorzugt in einem Volumenverhältnis im Bereich von 1:2 bis 2:1 im Elektrolyten enthalten.
      Besonders bevorzugt sind die flüssigen Komponenten bevorzugt in einem Volumenverhältnis im Bereich von 1:2 bis 2:1 im Elektrolyten enthalten.
   - NaN(SO₂F)₂ gelöst in mindestens einem organischen Lösungsmittel, insbesondere in 1,4-Dioxan (DX) und/oder 1,3-Dioxolan (DOL) und/oder Dimethylether (DME).
      Die Konzentration des NaN(SO₂F)₂ im Elektrolyten beträgt bevorzugt 0,3 - 5 M, besonders bevorzugt 0,7 M - 1,7 M.
      Bei einer Mischung DX/DOL sind die Komponenten bevorzugt in einem Volumenverhältnis im Bereich von 1:2 bis 2:1 im Elektrolyten enthalten.
   - NaBF₄ gelöst in mindestens einem organischen Lösungsmittel, insbesondere in Tetraethylenglykoldimethylether (TEGDME) und/oder in ACN und/oder in PC und/oder GBL.
      Die Konzentration des NaBF4 im Elektrolyten beträgt bevorzugt 0,3 - 5 M, besonders bevorzugt 0,7 M - 1,7 M.
      Ein Elektrolyt mit NaBF4 in TEGDME eignet sich insbesondere für Zellen mit Na-Metallanode (siehe unten).

Besonders bevorzugt sind die Merkmale a. und c. sowie b. und c. in Kombination miteinander verwirklicht.

Merkmal a. bezieht sich insbesondere auf die beschriebene Ausführungsform des erfindungsgemäßen Energiespeicherelements als zylindrische Rundzelle. In dieser Ausführungsform umfasst das Energiespeicherelement bevorzugt genau eine elektrochemische Zelle.

Merkmal b. bezieht sich insbesondere auf die beschriebene prismatische Ausführungsform des erfindungsgemäßen Energiespeicherelements. In dieser Ausführungsform kann das Energiespeicherelement auch mehr als eine elektrochemische Zelle umfassen.

Bevorzugt umfasst das erfindungsgemäße Energiespeicherelement auf Basis von Natrium-Ionen weiterhin einen Elektrolyten, der mindestens eines der folgenden Lösungsmittel und mindestens eines der folgenden Leitsalze umfasst:

### Bevorzugte Lösungsmittel sind:

- Carbonate: Propylencarbonat (PC), Ethylencarbonat-Propylencarbonat (EC-PC), Propylencarbonat-Dimethylcarbonat-Ethylmethylcarbonat (PC-DMC-EMC), Ethylencarbonat-Diethylcarbonat (EC-DEC), Ethylencarbonat-Dimethylcarbonat (EC-DMC), Ethylencarbonat-Ethylmethylcarbonat (EC-EMC), Ethylencarbonat-Dimethylcarbonat-Ethylmethylcarbonat (EC-DMC-EMC), Ethylencarbonat-Dimethylcarbonat-Diethylcarbonat (EC-DMC-DEC)
- Ether: Tetrahydrofuran (THE), 2-Methyltetrahydrofuran, Dimethylether (DME), 1,4-dioxane (DX), 1,3-dioxolane (DOL), Diethylenglykoldimethylether (DEGDME), Tetraethylenglykoldimethylether (TEGDME)
- Nitrile: Acetonitril (ACN), Adiponitril (AON), y-Butyrolactone (GBL)

Weiterhin kommen auch Trimethylphosphat (TMP) und Tris(2,2,2-trifluoroethyl)phosphat (TFP) in Frage.

### Bevorzugte Leitsalze sind:

NaPF₆, Natrium-difluoro(oxalato)borat (NaBOB), NaBF₄, Natriumbis(fluorosulfonyl)imid (NaFSI), Natrium-2-trifluoromethyl-4,5-dicyanoimidazol (NaTDI), Natrium-bis(trifluoromethansulfonyl)imid (NaTFSI), NaAsF₆, NaBF₄, NaClO₄, NaB(C₂O₄)₂, NaP(C₆H₄O₂)₃; NaCF₃SO₃, Natriumtriflat (NaTf) und Et₄NBF₄.

Die Leitsalze können wie die Lösungsmittel auch als Mischung aus zwei oder mehr Leitsalzen eingesetzt werden.

Dem Elektrolyten können in bevorzugten Ausführungsformen Additive zugesetzt sein. Beispiele bevorzugter Additive, insbesondere zur Stabilisierung, sind die folgenden:
Fluoroethylencarbonat (FEC), Transdifluoroethylencarbonat (DFEC), Ethylensulfit (ES), Vinylencarbonat (VC), Bis(2,2,2-trifluoroethyl)ether (BTFE), Natrium-2-trifluoromethyl-4,5-dicyanoimidazol (NaTDI), Natriumbis(fluorosulfonyl)imide (NaFSI), Aluminumchlorid (AlCl₃), Ethylensulfat (DTD), Natriumdifluorophosphat (NaPO₂F₂), Natriumdifluoro(oxalato)borat (NaODFB), Natriumdifluorobisoxalatophosphat (NaDFOP) und Tris(trimethylsilyl)borat (TMSB).

An Stelle von flüssigen Elektrolyten mit besagten Leitsalzen können auch ionische Flüssigkeiten eingesetzt werden, z.B. 0.8 mol/l Natrium-bis(fluorosulfonyl)imid (Na-TFSI) in 1-methyl-1-propylpyrro-lidiniumbis(trifluoromethylsulfonyl)imid (PMPyrr-TFSI).

Als weitere Alternative kommen auch Natrium-Polymerelektrolyte in Frage, beispielsweise Polymerelektrolyte auf Basis von Polyethlenoxid (PEO) oder auf Basis von Polyvinylidendifluoridcohexafluoropropylen, wie z.B. P(EO)₈NaCF₃SO₃ oder Hydroxyethylcellulose-polyethylenoxid.

An Stelle von Flüssigelektrolyten auf Basis organischer Lösungsmittel können in speziellen Anwendungsfällen auch wässrige Natrium-Elektrolyte mit Anionen aus der Gruppe mit OH-, NO₃, Cl⁻ und SO₄²⁻ eingesetzt werden, oder aber wässrige Lösungen von NaFSI, NaTDI oder NaTFSI.

### Bevorzugte Ausführungsformen der Elektrodenmaterialien

Bei dem negativen Elektrodenmaterial eines erfindungsgemäßen Energiespeicherelements auf Basis von Natrium-Ionen handelt es sich bevorzugt um mindestens eines der folgenden Materialien:
- Kohlenstoff, besonders präferiert Hardcarbon (rein oder mit Stickstoff- und/oder Phosphor-Dotierung) oder Softcarbon oder Graphene-basierte Materialien (mit N-dotierung); Kohlenstoffnanotubes, Graphit
- Phosphor oder Schwefel (Konversionsanode)
- Polyanionen: Na₂Ti₃O₇, Na₃Ti₂(PO₄)₃, TiP₂O₇, TiNb₂O₇, Na-Ti-(PO₄)₃, Na-V-(PO₄)₃
- Sn- oder Sb-basierte Materialien wie Sn(Na₁₅Sn₄), Sb(Na₃Sb), SnO₂, Sb₂O₃
- Preussisch Blau: Na-arme Variante (für Systeme mit wässrigem Elektrolyt)
- Übergangsmetalloxide: V₂O₅, MnO₂, TiO₂, Nb₂O₅, Fe₂O₃, Na₂Ti₃O₇, NaCrTiO₄, Na₄Ti₅O₁₂
- MXene mit M= Ti, V, Cr, Mo oder Nb und A=Al, Si, und Ga sowie X= C und/oder N, z.B. Ti₃C₂
- Organisch: z.B. Na-Terephthalate (Na₂C₈H₂O₄)

Eine beispielhafte Übersicht geeigneter Anodenmaterialien findet sich auch in der Veröffentlichung von Zhang et al., "SODIUM-ION BATTERY ANODES: STATUS AND FUTURE TRENDS", Energy-Chem 1, 100012 (2019) aus dem Jahr 2019 in Tabelle 2 auf Seite 19.

Alternativ kann anodenseitig grundsätzlich auch eine Na-Metallanode zum Einsatz kommen. Das metallische Natrium ist dabei bevorzugt in eine poröse, elektrisch leitfähige Matrixstruktur mit guter Na-Benetzbarkeit eingebettet. Von großer Bedeutung sind hier minimale elektrische, thermische, mechanische Gradienten, die in der erfindungsgemäßen Zelle durch das Design mit stirnseitiger Kontaktierung des Elektrodenwickels ermöglicht werden.

Bei dem positiven Elektrodenmaterial eines erfindungsgemäßen Energiespeicherelements auf Basis von Natrium-Ionen handelt es sich bevorzugt um mindestens eines der folgenden Materialien:
- Polyanionen: NaFePO₄ (Triphylit-Typ), Na₂Fe-(P₂O₇), Na₄Fe₃(PO₄)₂(P₂O₇), Na₂FePO₄F, Na/Na₂[Fe_{1/2}Mn_{1/2}]PO₄F, Na₃V₂(PO₄)₂F₃, Na₃V₂(PO₄)₃, Na₄(CoMnNi)₃(PO₄)₂P₂O₇, NaCoPO₄, Na₂CoPO₄F
- Silikate: Na₂MnSiO₄, Na₂FeSiO₄
- Preussisch Blau / Weiss: Preussisch Blau (PB) existiert in Form von AₓFe[Fe(CN)₆]_{1-y}*nH₂O mit A = Alkalimetall und 0 < x < 2 und y < 1; Preussisch Weiss (Na ~ 2) in Form von Na2Fe[Fe(CN)6], KFe₂(CN)₆, MnFe(CN)₆ und Fe₂(CN)₆
- Schichtoxide: NaCoO₂, NaFeO₂, NaNiO₂, NaCrO₂, NaVO₂, NaTiO₂, Na(FeCo)O₂, Na(NiFeCo)₃O₂, Na(NiFeMn)O₂, and Na(NiFeCoMn)O₂, Na(NiMnCo)O₂

Auch Blends der genannten positiven Elektrodenmaterialien sind einsetzbar.

Daneben enthalten die Elektroden eines erfindungsgemäßen Energiespeicherelements bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei die Aktivmaterialien bevorzugt partikulär eingesetzt werden und benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), (Na-)Polyacrylat, Styrol-Butadien-Kautschuk, (Na-)Alginat oder Carboxymethylzellulose oder auch Mischungen unterschiedlicher Binder. Übliche Leitmittel sind Ruß, feine Grafite, Kohlenstofffasern, Carbon-Nanotubes und Metallpulver.

Besonders bevorzugt für Energiespeicherelemente auf Natrium-Ionen-Basis sind die folgenden Materialkombinationen

| | |
|---|---|
| Positive Elektrode: | Na₃V₂(PO₄)₃ |
| Negative Elektrode: | Hard Carbon |
| Elektrolyt: | Bevorzugt NaPF6 in EC:PC:DMC (45:45:10 Vol.-%) |
| Positive Elektrode: | Na_{2/3}(Ni_{1/3}Mn_{2/3})O₂ |
| Negative Elektrode: | Hard Carbon |
| Positive Elektrode: | Na₂Fe[Fe(CN)₆] |
| Negative Elektrode: | Hard Carbon |
| Elektrolyt: | Bevorzugt NaPF6 in EC:PC |

### Ionendepot

Die Funktion einer Natrium-, Kalium-, Calcium-, Magnesium- oder Aluminium-Ionen-Zelle basiert darauf, dass ausreichend mobile Ionen (im Falle einer Natrium-Ionen-Zelle etwa mobile Natrium-Ionen) zur Verfügung stehen, um durch Wanderung zwischen der Anode und der Kathode bzw. der negativen Elektrode und der positiven Elektrode den abgegriffenen elektrischen Strom auszugleichen. Unter mobilen Ionen im Rahmen dieser Anmeldung ist zu verstehen, dass die Ionen für Ein- und Auslagerungsvorgänge in den Elektroden im Rahmen der Entlade- und Ladevorgänge des erfindungsgemäßen Energiespeicherelements zur Verfügung steht oder hierfür aktiviert werden können. Im Zuge der ablaufenden Entlade- und Ladeprozesse z.B. einer Natrium-Ionen-Zelle kommt es im Laufe der Zeit zu Verlusten an mobilem Natrium. Diese Verluste treten in Folge von verschiedenen, in der Regel nicht vermeidbaren Nebenreaktionen auf. Bereits im Rahmen des ersten Lade- und Entladezyklus einer Natrium-Ionen-Zelle kommt es zu Verlusten an mobilem Natrium. Bei diesem ersten Lade- und Entladezyklus bildet sich in der Regel eine Deckschicht auf der Oberfläche der elektrochemisch aktiven Komponenten an der negativen Elektrode. Diese Deckschicht wird als Solid Electrolyte Interphase (SEI) bezeichnet und besteht in der Regel vor allem aus Elektrolytzersetzungsprodukten sowie einer gewissen Menge an Natrium, das in dieser Schicht fest gebunden ist.

Um diese Verluste auszugleichen, zeichnet sich das erfindungsgemäße Energiespeicherelement auf Natrium-Ionen-Basis in bevorzugten Ausführungsformen durch mindestens eines der unmittelbar folgenden Merkmale a. und b. aus:
a. Das Energiespeicherelement umfasst ein nicht von der positiven und/oder der negativen Elektrode umfasstes Depot an Natrium oder einem natriumhaltigen Material, mit dem Verluste an mobilem Natrium während des Betriebs ausgeglichen werden können.
b. Das Depot steht in Kontakt mit dem Elektrolyten des Energiespeicherelements.

Es ist besonders bevorzugt, dass die unmittelbar vorstehenden Merkmale a. und b. in Kombination miteinander verwirklicht sind.

Besonders geeignet als natriumhaltiges Material sind beispielsweise Na3P und Na3N, Na₂C₂O₄, Na2S, Na₂C₄O₄, Na₂C₆O₆, EDTA-4Na, DPTA-5Na oder Na₃P. Diese Materialien können beispielsweise dem Elektrodenaktivmaterial zugesetzt werden. Eine zusätzliche Na-Quelle führt zu höherer Kapazität bzw. höherer Zyklenlebensdauer.

Es ist auch denkbar, dass die Elektroden durch Vorladung mit einem Überschuss an Natriumionen beladen werden.

Für Ausführungsformen des erfindungsgemäßen Energiespeicherelements auf Basis von Kalium-, Calcium-, Magnesium- oder Aluminium-Ionen gilt analoges.

### Bevorzugte Ausführungsformen des Separators und des Festelektrolyten

Bevorzugt werden der Separator oder die Separatoren aus elektrisch isolierenden Kunststofffolien gebildet. Es ist bevorzugt, dass die Separatoren von dem Elektrolyten durchdrungen werden kann. Zu diesem Zweck können die verwendeten Kunststofffolien beispielsweise Mikroporen aufweisen. Die Folie kann beispielsweise aus einem Polyolefin oder aus einem Polyetherketon bestehen. Auch Vliese und Gewebe aus Kunststoffmaterialien oder andere elektrisch isolierende Flächengebilde können als Separator zum Einsatz kommen. Bevorzugt werden Separatoren eingesetzt, die eine Dicke im Bereich von 5 µm bis 50 µm aufweisen.

Insbesondere bei den prismatischen Ausführungsformen des Energiespeicherelements kann es sich bei dem Separator oder den Separatoren des Verbundes auch um eine oder mehrere Schichten aus einem Festelektrolyten handeln.

Bei dem Festelektrolyten kann es sich beispielsweise um einen Polymerfestkörperelektrolyten basierend auf einem Polymer-Leitsalzkomplex, der einphasig ohne jegliche Flüssigkomponente vorliegt. Als Polymermatrix kann ein Polymerfestkörperelektrolyt beispielsweise Polyacrylsäure (PAA), Polyethylenglycol (PEG) oder Polymethylmethacrylat (PMMA), insbesondere auch Polyethylenoxid (PEO) aufweisen. In diesen können im Fall einer Natrium-Ionen-Zelle Natrium-Leitsalze wie beispielsweise Natrium-bis-(trifluoromethan)sulfonylimid (NaTFSI), Natriumhexafluorophosphat (NaPF₆) und Natriumtetrafluoroborat (NaBF4) gelöst vorliegen.

### Keramische Verstärkung des Separators

Weitere bevorzugte Ausgestaltungen des Separators können in Einzelfällen zweckmäßig sein. So zeichnet sich das erfindungsgemäße Energiespeicherelement bevorzugt weiterhin durch mindestens eines der unmittelbar folgenden Merkmale a. und b. aus:
a. Die Seite des Verbundkörpers, aus der der freie Randstreifen des Kathodenstromkollektors oder der freie Randstreifen des Anodenstromkollektors austritt, wird von einem Rand des Separators, bei einem Energiespeicherelement mit gewickeltem Verbundkörper insbesondere einem Längsrand des Separators, gebildet.
b. Der Rand oder Längsrand des Separators, der die Seite, insbesondere die Stirnseite, bildet, ist keramisch verstärkt.

In einer bevorzugten Weiterbildung zeichnet sich das erfindungsgemäße Energiespeicherelement durch das unmittelbar folgende Merkmal a. aus:
a. Die keramische Verstärkung wird durch mindestens ein partikuläres keramisches Material, insbesondere mindestens ein partikuläres keramisches Füllmaterial in dem Separator, bewirkt.

Bei dem Separator kann es sich also bevorzugt um eine elektrisch isolierende Kunststofffolie handeln, in die das partikuläre Füllmaterial eingelagert ist. Es ist bevorzugt, dass die Kunststofffolie von dem Elektrolyten durchdrungen werden kann, beispielsweise weil sie Mikroporen aufweist. Die Folie kann beispielsweise aus einem Polyolefin oder aus einem Polyetherketon gebildet sein. Wie erwähnt, können auch Vliese und Gewebe aus solchen Kunststoffmaterialien zum Einsatz kommen.

Auch diese können in Einzelfällen bevorzugt sein.

Der Anteil an dem partikulären Füllmaterial in dem Separator beträgt bevorzugt mindestens 40 Gew.-%, besonders bevorzugt mindestens 60 Gew.-%.

In einer weiteren bevorzugten Weiterbildung zeichnet sich das erfindungsgemäße Energiespeicherelement durch das unmittelbar folgende Merkmal a. aus:
a. Die keramische Verstärkung wird durch mindestens ein partikuläres keramisches Material bewirkt, das als Beschichtung auf einer Oberfläche des oder der Separatoren vorliegt.

Bei dem Separator kann es sich also bevorzugt auch um eine Kunststofffolie oder ein Vlies oder ein Gewebe oder ein sonstiges elektrisch isolierendes Flächengebilde handeln, die oder das mit einem keramischen Material beschichtet ist.

In einigen Ausführungsformen ist nur eine Seite des Flächengebildes, insbesondere der Kunststofffolie, mit dem keramischen Material beschichtet. In weiteren Ausführungsformen ist das Flächengebilde, insbesondere die Kunststofffolie, bevorzugt beidseitig mit dem keramischen Material beschichtet.

Gegebenenfalls kann es auch bevorzugt sein, dass die verwendeten Separatoren ein keramisches Material als Füllmaterial und das gleiche oder ein anderes keramisches Material als Beschichtung umfassen.

In weiteren möglichen bevorzugten Weiterbildungen zeichnet sich das erfindungsgemäße Energiespeicherelement durch mindestens eines der unmittelbar folgenden Merkmale a. bis e. aus:
a. Das mindestens eine keramische Material / Füllmaterial ist oder umfasst ein elektrisch isolierendes Material.
b. Das mindestens eine keramische Material / Füllmaterial ist oder umfasst mindestens ein Material aus der Gruppe mit glaskeramischem Material und Glas.
c. Das mindestens eine keramische Material / Füllmaterial ist oder umfasst ein Natriumionen leitendes keramisches Material, beispielsweise Na₅AlO₄*Na₄SiO₄ oder NaAlSi₂O₆. oder β-Al₂O₃ oder ein NASICON-Material wie z.B. Na₃Zr₂Si₂PO₁₂.
d. Das mindestens eine keramische Material / Füllmaterial ist oder umfasst ein oxidisches Material, insbesondere ein Metalloxid.
e. Bei dem keramischen oder dem oxidischen Material handelt es sich um Aluminiumoxid (Al₂O₃), um Siliziumoxid (SiOₓ), insbesondere um Siliziumdioxid (SiO₂), um Titanoxid (TiO₂), um Titannitrid (TiN), um Titanaluminiumnitrid (TiAlN), um ein Siliziumoxid, insbesondere Siliziumdioxid (SiO₂) oder um Titancarbonitrid (TiCN).

Es ist besonders bevorzugt, dass die unmittelbar vorstehenden Merkmale a. bis c. oder die unmittelbar vorstehenden Merkmale a. und b. und d. oder die unmittelbar vorstehenden Merkmale a. und b. und e. in Kombination miteinander verwirklicht sind.

Unter den genannten Materialien sind als Beschichtungsmaterialien Aluminiumoxid (Al₂O₃), Titanoxid (TiO₂) und Siliziumdioxid (SiO₂) besonders bevorzugt.

In weiteren möglichen bevorzugten Weiterbildungen zeichnet sich das erfindungsgemäße Energiespeicherelement durch mindestens eines der unmittelbar folgenden Merkmale a. und b. aus:
a. Der Separator oder die Separatoren umfassen das mindestens eine keramische Material lediglich bereichsweise.
b. Der Separator oder die Separatoren weisen entlang des die erste Seite, insbesondere die erste Stirnseite, bildenden Rands einen Randstreifen auf, in dem sie das mindestens eine keramische Material als Beschichtung und/oder als partikuläres Füllmaterial umfassen.

Es ist besonders bevorzugt, dass die unmittelbar vorstehenden Merkmale a. und b. in Kombination miteinander verwirklicht sind.

Es ist keinesfalls zwingend erforderlich, dass der Separator das keramische Material in homogener Verteilung umfasst oder gleichmäßig und überall mit dem Material beschichtet ist. Vielmehr kann es sogar bevorzugt sein, dass der Separator in bestimmten Bereichen, beispielsweise in dem erwähnten Hauptbereich, frei von dem keramischen Material ist. In diesem Bereich wird eine erhöhte thermische Beständigkeit des Separators nicht so sehr benötigt wie an den Rändern des Separators. Darüber hinaus kann das keramische Material insbesondere in diesem Bereich zu einer ungewollten Erhöhung des Innenwiderstands des erfindungsgemäßen Energiespeicherelements beitragen.

In vielen Ausführungsformen ist der Separator allerdings bevorzugt vollflächig- also auch zwischen Anode und Kathode - mit dem keramischen Material verstärkt bzw. beschichtet.

Die stirnseigen Elektrodenbereiche ohne Aktivmaterialbeschichtung, könnten ganz oder teilweise mit keramischen Materialien beschichtet sein, um dort die Kurzschlussgefahr zu reduzieren.

Weitere Details zu Beschichtungen von Separatoren mit keramischen Materialien sind der WO 2021/255238 A1 zu entnehmen.

### Bevorzugte Ausführungsformen der Stromkollektoren

Die Stromkollektoren der Elektroden des erfindungsgemäßen Energiespeicherelements dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert.

Insbesondere im Falle eines erfindungsgemäßen Energiespeicherelements auf Basis von NatriumIonen eignen sich als metallisches Material sowohl für den Anodenstromkollektor als auch für den Kathodenstromkollektor Aluminium oder und eine Aluminiumlegierung. Natrium-Ionen-Systeme die sowohl anoden- als auch kathodenseitig Stromkollektoren aus Aluminium oder aus einer Aluminiumlegierung aufweisen, haben sich als besonders resistent gegenüber den Auswirkungen von Tiefentladungen erwiesen.

Geeignete Aluminiumlegierungen für den Kathodenstromkollektor sind beispielsweise Al-Legierungen vom Typ 1235, 1050, 1060, 1070, 3003, 5052, Mg3, Mg212 (Serie 3000) und GM55. Weiterhin geeignet sind AlSi, AlCuTi, AlMgSi, AlSiMg, AlSiCu, Al-CuTiMg und AlMg. Der Aluminiumanteil besagter Legierungen liegt bevorzugt oberhalb von 99,5 %.

Bevorzugt handelt es sich bei dem Anodenstromkollektor und/oder dem Kathodenstromkollektor jeweils um eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

### Randverstärkung des oder der Stromkollektoren

Bevorzugt zeichnet sich das erfindungsgemäße Energiespeicherelement weiterhin durch mindestens eines der unmittelbar folgenden Merkmale a. bis c. aus:
a. In dem freien Randstreifen des Kathodenstromkollektors und/oder in dem freien Randstreifen des Anodenstromkollektors ist die Oberfläche des Kathodenstromkollektors und/oder des Anodenstromkollektors mit einem Stützmaterial beschichtet, das thermisch beständiger als die damit beschichtete Oberfläche ist.
b. Bei dem nichtmetallischen Material handelt es sich um ein keramisches Material, ein glaskeramisches Material oder um ein Glas.
c. Bei dem keramischen Material handelt es sich um Aluminiumoxid (Al₂O₃), um Titanoxid (TiO₂), um Titannitrid (TiN), um Titanaluminiumnitrid (TiAlN) oder um Titancarbonitrid (TiCN).

"Thermisch beständiger" soll bedeuten, dass das Stützmaterial bei einer Temperatur, bei der die Oberfläche schmilzt, einen festen Zustand behält. Es weist also entweder einen höheren Schmelzpunkt als die Oberfläche auf oder aber es sublimiert oder zersetzt sich erst bei einer Temperatur, bei der die Oberfläche bereits geschmolzen ist.

Bevorzugt sind sowohl der freie Randstreifen des Kathodenstromkollektors als auch der freie Randstreifen des Anodenstromkollektors mit dem Stützmaterial beschichtet. Besonders bevorzugt wird jeweils das gleiche Stützmaterial verwendet.

Die Kontaktmetallbleche, die mit dem oder den freien Randstreifen in unmittelbarem Kontakt stehen, werden bevorzugt durch Verschweißung mit den Randstreifen verbunden. Dabei kann es zu Problemen, nämlich einem unbeabsichtigten Niederdrücken oder Schmelzen der Randstreifen der Stromkollektoren, kommen. Diesen Problemen wirkt das Stützmaterial entgegen. Es stützt die Randstreifen der Stromkollektoren mechanisch und unterbindet ein Aufschmelzen der Ränder, insbesondere wenn die Randstreifen beidseitig mit dem Stützmaterial beschichtet sind. Des Weiteren beugt das Stützmaterial auch Kurzschlüssen vor, die aus dem eingangs erwähnten Schmelzen von Separatoren des Verbundkörpers resultieren. Das Stützmaterial isoliert die damit abgedeckten freien Bereiche elektrisch. Es ist also in bevorzugten Ausführungsformen elektrisch isolierend ausgebildet.

Weitere Details zu geeigneten Stützmaterialien sind der WO 2020/239512 A1 zu entnehmen.

### Bevorzugte Ausführungsformen des Verbundkörpers

Um einen direkten Kontakt entgegengesetzt gepolter Elektroden an den axialen Enden eines Wickels oder Stapels zu verhindern, verwendet man bevorzugt Separatoren, die etwas breiter sind als die zu separierenden Elektroden. Bei einem Energiespeicherelement mit gewickeltem Verbundkörper schließt der Verbundkörper somit an seinen axialen Enden in bevorzugten Ausführungsformen jeweils mit einem Separatorüberstand ab, der entsprechend die Stirnseiten bildet.

Im Fall der beschriebenen prismatischen Konfiguration ist es bevorzugt, dass die Ränder des oder der Separatoren die Seiten des Stapels bilden, aus denen die freien Randstreifen der Stromkollektoren hervortreten.

Es ist weiterhin bevorzugt, dass die aus den endständigen Stirnseiten des Wickels oder Seiten des Stapels austretenden freien Randstreifen der Stromkollektoren nicht mehr als 5500 µm, bevorzugt nicht mehr als 4000 µm, aus den Stirnseiten oder den Seiten herausragen.

Besonders bevorzugt ragt der freie Randstreifen des Anodenstromkollektors aus der Seite des Stapels oder der Stirnseite des Wickels nicht mehr als 3000 µm, besonders bevorzugt nicht mehr als 2000 µm, heraus. Besonders bevorzugt ragt der freie Randstreifen des Kathodenstromkollektors aus der Seite des Stapels oder der Stirnseite des Wickels nicht mehr als 4000 µm, besonders bevorzugt nicht mehr als 3000 µm, heraus.

In dem als Wickel ausgebildeten Verbundkörper liegen die bandförmige Anode, die bandförmige Kathode und deroderdie bandförmigen Separatoren bevorzugtspiralförmigaufgewickeltvor. Zur Herstellung des Verbundkörpers werden vorzugsweise die bandförmigen Elektroden gemeinsam mit dem oder den bandförmigen Separatoren einer Wickelvorrichtung zugeführt und bevorzugt in dieser um eine Wickelachse herum spiralförmig aufgewickelt. In einigen Ausführungsformen werden die Elektroden und der oder die Separatoren hierzu auf einen zylindrischen oder hohlzylindrischen Wickelkern aufgewickelt, der auf einem Wickeldorn sitzt und nach dem Wickeln im Wickel verbleibt.

Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

### Bevorzugte Ausführungsformen des ersten und/oder des zweiten Kontaktmetallblechs

Das oder die Kontaktmetallbleche sind bevorzugt mit den jeweiligen Stromkollektoren, mit denen sie in unmittelbarem Kontakt stehen, durch Verschweißung verbunden. Besonders bevorzugt ist es mit dem freien Randstreifen des Anodenstromkollektors unmittelbar durch Verschweißung verbunden.

In bevorzugten Ausführungsformen bestehen die Kontaktmetallbleche aus dem gleichen Material wie die Stromkollektoren, mit denen sie durch Verschweißung verbunden sind.

In besonders bevorzugten Ausführungsformen bestehen die Kontaktmetallbleche, insbesondere im Fall erfindungsgemäßer Energiespeicherelement auf Natrium-Ionen-Basis, aus Aluminium oder aus einer Aluminiumlegierung.

Als Aluminiumlegierung kommen die gleichen Legierungen in Frage, die auch im Zusammenhang mit Stromkollektoren aus einer Aluminiumlegierung erwähnt wurden.

In anderen bevorzugten Ausführungsformen bestehen die Kontaktmetallbleche beispielsweise aus Nickel oder Kupfer oder Titan oder einer Nickel- oder Kupfer- oder Titanlegierung oder aus Edelstahl.

In einer weiteren besonders bevorzugten Ausführungsform der Erfindung zeichnet sich das erste Kontaktmetallblech durch mindestens eines der unmittelbar folgenden Merkmale a. bis g. aus:
a. Das Kontaktmetallblech weist eine bevorzugt gleichmäßige Dicke im Bereich von 50 µm bis 600 µm, bevorzugt im Bereich von 150 µm bis 350 µm, auf.
b. Das Kontaktmetallblech weist zwei sich gegenüberliegenden Flachseiten auf und erstreckt sich im Wesentlichen nur in einer Dimension.
c. Das Kontaktmetallblech ist eine Scheibe oder eine bevorzugt rechteckige Platte.
d. Das Kontaktmetallblech ist derart dimensioniert, dass es mindestens 60 %, bevorzugt mindestens 70 %, besonders bevorzugt mindestens 80 %, der Seite oder Stirnseite, aus der der mit ihm verbundene freie Randstreifen des jeweiligen Stromkollektors heraustritt, abdeckt.
e. Das Kontaktmetallblech weist mindestens eine Durchbrechung, insbesondere mindestens ein Loch und/oder mindestens einen Schlitz, auf.
f. Das Kontaktmetallblech weist mindestens eine Sicke auf, die auf einer Flachseite des Kontaktmetallblechs als längliche Vertiefung und auf der gegenüberliegenden Flachseite als längliche Erhöhung zu Tage tritt, wobei das Kontaktmetallblech mit der Flachseite, welche die längliche Erhöhung trägt, auf dem freien Randstreifen des jeweiligen Stromkollektors aufsitzt.
g. Das Kontaktmetallblech ist im Bereich der Sicke mit dem freien Randstreifen des Stromkollektors verschweißt, insbesondere über eine oder mehrere in der Sicke angeordnete Schweißnähte und/oder Schweißpunkte.

Es ist besonders bevorzugt, dass die unmittelbar vorstehenden Merkmale a. und b. und d. in Kombination miteinander realisiert sind. In einer bevorzugten Ausführungsform sind die Merkmale a. und b. und d. in Kombination mit einem der Merkmale c. oder e. oder den Merkmalen f. und g realisiert. Besonders bevorzugt sind alle Merkmale a. bis g. in Kombination miteinander realisiert.

Die möglichst großflächige Abdeckung der Stirnseite ist für das thermische Management des erfindungsgemäßen Energiespeicherelements von Bedeutung. Je größer die Abdeckung ist, desto eher ist es möglich, den ersten Rand des Stromkollektors möglichst über seine gesamte Länge zu kontaktieren. Im Verbundkörper gebildete Wärme kann so gut über das Kontaktmetallblech abgeführt werden.

Besonders vorteilhaft ist, wenn das Kontaktmetallblech möglichst mit allen Windungen eines Wickels, also auch mit den innersten und äußersten Windungen des Wickels, in unmittelbarem Kontakt steht.

Die mindestens eine Durchbrechung in dem Kontaktmetallblech kann beispielsweise zweckmäßig sein, um den Verbundkörper mit einem Elektrolyten tränken zu können.

### Elektrische Anbindung des oder der Kontaktmetallbleche

### Das Kontaktmetallblech ist

- entweder mit dem Gehäuse elektrisch verbunden oder
- mit einem Kontaktpol, der durch das Gehäuse geführt und gegenüber dem Gehäuse elektrisch isoliert ist, verbunden, oder
- das Kontaktmetallblech ist ein Teil des Gehäuses, beispielsweise der Boden eines becherförmig ausgebildeten Gehäuseteils oder der Deckel für ein solches becherförmig ausgebildetes Gehäuseteil.

Der elektrische Kontakt zum Gehäuse oder dem Kontaktpol kann insbesondere durch Verschweißung oder eine mechanische Verbindung realisiert sein. Gegebenenfalls kann die elektrische Verbindung auch über einen separaten elektrischen Leiter bestehen.

Zur optimalen Anbindung des oder der Kontaktmetallbleche an die Stromkollektoren kann es bevorzugt sein, Seiten oder Stirnseiten einer mechanischen Vorbehandlung zu unterziehen. Beispielsweise können die aus den Stirnseiten eines Elektrodenwickels austretenden Stromkollektorränder deformiert werden um eine passende Aufnahme für die Erhöhungen eines Kontaktmetallblechs mit mindestens einer Sicke, wie es oben beschrieben wurde, zu schaffen.

### Bevorzugte Ausgestaltung der Gehäuseteile

Ungeachtet seiner Form (z.B. prismatisch oder zylindrisch) ist das Gehäuse eines erfindungsgemäßen Energiespeicherelements bevorzugt ein Metallgehäuse. Besonders bevorzugt umfasst es ein becherförmig ausgebildetes Gehäuseteil und einen Deckel.

In einer bevorzugten Ausführungsform der Erfindung zeichnet sich das erfindungsgemäße Energiespeicherelement durch mindestens eines der unmittelbar folgenden Merkmale a. und b. aus:
a. Das becherförmig ausgebildete Gehäuseteil besteht aus Aluminium, einer Aluminiumlegierung, Nickel, Kupfer, Edelstahl oder einem vernickelten Stahl.
b. Der Deckel besteht aus Aluminium, einer Aluminiumlegierung, Nickel, Kupfer, Edelstahl oder einem vernickelten Stahl.

Besonders bevorzugt sind die unmittelbar vorstehenden Merkmale a. und b. in Kombination realisiert.

In einigen Ausführungsformen ist eine direkte Anbindung des freien Randstreifens eines der Stromkollektoren an das Gehäuse wünschenswert. Zu diesem Zweck kann der freie Randstreifen dieses Stromkollektors beispielsweise mittels eines Lasers an den Boden eines becherförmig ausgebildeten Gehäuseteils geschweißt werden. Dieser Boden dient in diesem Fall als Kontaktplatte.

Umgekehrt kann es in einigen Ausführungsformen vorgesehen sein, dass eine Kontaktplatte als Deckel, also als Teil des Gehäuses, dient.

Insbesondere im Fall von Natrium-Ionen-Zellen kann es in besonders bevorzugten Ausführungsformen vorgesehen sein, dass sowohl das becherförmig ausgebildete Gehäuseteil als auch der Deckel aus Aluminium oder aus einer Aluminiumlegierung bestehen.

Geeignete Aluminiumlegierungen für das becherförmig ausgebildete Gehäuseteil sind beispielsweise Al-Legierungen vom Typ 1235, 1050, 1060, 1070, 3003, 5052, Mg3, Mg212 (Serie 3000) und GM55. Weiterhin geeignet sind AlSi, AlCuTi, AlMgSi, AlSiMg, AlSiCu, AlCuTiMg und AlMg. Der Aluminiumanteil besagter Legierungen liegt bevorzugt oberhalb von 99,5 %.

In einigen Ausführungsformen ist der Boden des becherförmigen Gehäuseteils eingeschweißt, wurde also separat gefertigt und mit der Seitenwand oder den Seitenwänden durch Verschweißung verbunden. In den meisten Fällen ist das becherförmige Gehäuseteil allerdings durch Tiefziehen gefertigt.

### Bevorzugte Nennkapazität des Energiespeicherelements

Die Nennkapazität eines als zylindrische Rundzelle ausgebildeten erfindungsgemäßen Energiespeicherelements auf Natrium-Ionen-Basis beträgt bevorzugt bis zu 10000 mAh. Mit einem Formfaktor von 21 × 70 hat das Energiespeicherelement in einer Ausführungsform als Natrium-Ionen-Zelle bevorzugt eine Nennkapazität im Bereich von 1000 mAh bis 5000 mAh.

### Isolation von Innenableitern

In besonders bevorzugten Ausführungsformen zeichnet sich das erfindungsgemäße Energiespeicherelement durch die unmittelbar folgenden Merkmale a. bis g. aus:
a. Es umfasst ein luft- und flüssigkeitsdicht verschlossenes Gehäuse, das ein metallisches becherförmig ausgebildetes Gehäuseteil mit dem Boden und einer endständigen kreisförmigen Öffnung sowie einen Deckel mit einem kreisförmigen Rand, welche die endständige kreisförmige Öffnung verschließt, aufweist.
b. In dem becherförmig ausgebildeten Gehäuseteil ist der Verbundkörper in axialer Ausrichtung angeordnet, wobei die erste Stirnseite in Richtung des Deckels und die zweite Stirnseite in Richtung des Bodens weist, gegebenenfalls unmittelbar mit dem Boden in Kontakt steht.
c. Es umfasst eine ringförmige Dichtung aus einem elektrisch isolierenden Material, die den kreisförmigen Rand des Deckels umschließt und das becherförmig ausgebildete Gehäuseteil und den Deckel elektrisch voneinander isoliert.
d. Das becherförmig ausgebildete Gehäuseteil umfasst eine Innenseite und eine Außenseite und in axialer Abfolge den Boden, einen Zentralabschnitt und einen Verschlussabschnitt, wobei
   - der Zentralabschnitt zylindrisch ausgebildet ist und in dem Zentralabschnitt der Wickelmantel des als Wickel ausgebildeten Verbundkörpers mit der Innenseite des becherförmig ausgebildeten Gehäuseteils in Kontakt steht, und
   - in dem Verschlussabschnittdie ringförmige Dichtung in einem Presskontakt mit dem Deckel und der Innenseite des becherförmig ausgebildeten Gehäuseteils steht.
e. Der Zentralabschnitt und der Verschlussabschnitt sind durch eine Einbuchtung, welche die Außenseite des becherförmig ausgebildeten Gehäuseteils ringförmig umläuft, getrennt.
f. Das Kontaktmetallblech ist mit dem freien Randstreifen des aus der ersten endständigen Stirnseite austretenden Stromkollektors durch Verschweißung und mit dem Deckel elektrisch, bevorzugt ebenfalls durch Verschweißung, verbunden.
g. Das Energiespeicherelement umfasst mindestens ein Isolierelement aus einem elektrisch isolierenden Material, das das Kontaktmetallblech und/oder den ersten Längsrand des aus der ersten endständigen Stirnseite austretenden Stromkollektors und/oder einen an dem Kontaktmetallblech fixierten separaten elektrischen Leiter vor einem unmittelbaren Kontakt mit der Innenseite des becherförmig ausgebildeten Gehäuseteils schützt, insbesondere im Bereich der Einbuchtung.

Durch diese Maßnahme wird gewährleistet, dass das Risiko eines Kurzschlusses im zellinternen Kontaktbereich reduziert wird. Beispielsweise im Zusammenhang mit einer Höhenkalibrierung auftretende axiale Kräfte führen in der Regel nicht mehr zu unmittelbaren Kontakten entgegengesetzt gepolter Zellkomponenten. Diese werden durch das mindestens eine Isolierelement unterbunden.

In einer ersten bevorzugten Weiterbildung dieser bevorzugten Ausführungsform zeichnet sich das erfindungsgemäße Energiespeicherelement durch mindestens eines der unmittelbar folgenden Merkmale a. bis c. aus:
a. Das mindestens eine Isolierelement ist oder umfasst ein Isolierband, das auf die Kante, welche die Stirnseite begrenzt, aufgebracht ist und diese vor einem unmittelbaren Kontakt mit der Innenseite schützt.
b. Das mindestens eine Isolierelement ist oder umfasst ringförmiges Formteil aus Kunststoff mit bevorzugt L-förmigem Querschnitt, das auf die Kante, welche die Stirnseite begrenzt, aufgebracht ist und diese vor einem unmittelbaren Kontakt mit der Innenseite schützt.
c. Das Isolierband oder das ringförmige Formteil aus Kunststoff weist eine Dicke im Bereich von 10 µm bis 200 µm auf.

Es ist bevorzugt, dass die unmittelbar vorstehenden Merkmale a. und c. sowie b. und c. in Kombination realisiert sind.

Bei dem Isolierband kann es sich beispielsweise um ein Kapton/Polyimid-Klebeband handeln.

Das ringförmige Formteil aus Kunststoff mit bevorzugt L-förmigem Querschnitt kann beispielsweise durch Spritzguss gefertigt sein und auf die zu schützende Kante aufgeschoben werden. Es kann beispielsweise aus Teflon oder aus Polyamid bestehen.

In einer zweiten bevorzugten Weiterbildung dieser bevorzugten Ausführungsform zeichnet sich das erfindungsgemäße Energiespeicherelement durch mindestens eines der unmittelbar folgenden Merkmale a. bis c. aus:
a. Das mindestens eine Isolierelement ist oder umfasst ein ringförmiges Isolierelement aus Kunststoff, das an der Innenseite des becherförmig ausgebildeten Gehäuseteils im Bereich der Einbuchtung anliegt und diese vor einem unmittelbaren Kontakt mit dem Kontaktmetallblech schützt.
b. Das ringförmige Isolierelement ist ein Teilabschnitt der ringförmigen Dichtung.
c. Das ringförmige Isolierelement aus Kunststoff weist eine Dicke im Bereich von 20 µm bis 400 µm auf.

Es ist bevorzugt, dass die unmittelbar vorstehenden Merkmale a. und b. in Kombination realisiert sind. Besonders bevorzugt sind die Merkmale a. bis c. in Kombination realisiert.

Auch das ringförmige Isolierelement kann ein Spritzgussteil sein, wie im Übrigen auch die ringförmige Dichtung. Die Dicke des Isolierelements liegt bevorzugt in einem Bereich von 20 µm bis 400 µm.

Das ringförmige Isolierelement kann beispielsweise aus Teflon, aus Polyamid, aus Polybutylenterephtalat oder aus einem Perfluoralkoxy-Polymer bestehen.

In einer dritten bevorzugten Weiterbildung dieser bevorzugten Ausführungsform zeichnet sich das erfindungsgemäße Energiespeicherelement durch mindestens eines der unmittelbar folgenden Merkmale a. bis d. aus:
a. Das mindestens eine Isolierelement ist oder umfasst ein ringförmiges Kunststoffteil, das das Kontaktmetallblech umschließt und dieses vor einem unmittelbaren Kontakt mit der Innenseite des becherförmig ausgebildeten Gehäuseteils im Bereich der Einbuchtung schützt.
b. Das ringförmige Kunststoffteil ist hohlzylindrisch ausgebildet, umfasst einen Mantel und wird stirnseitig durch je einen umlaufenden Rand begrenzt.
c. Das ringförmige Kunststoffteil ist hohlzylindrisch ausgebildet, umfasst einen Mantel und wird stirnseitig durch je einen umlaufenden Rand begrenzt, wobei einer der Ränder auf als nach außen gerichteter ringförmiger Kragen ausgebildet ist und auf dem Kontaktmetallblech aufsitzt.
d. Das ringförmige Kunststoffteil weist eine Dicke im Bereich von 20 µm bis 600 µm auf.

Es ist bevorzugt, dass die unmittelbar vorstehenden Merkmale a. und b., besonders bevorzugt die Merkmale a. und b. und d., in Kombination realisiert sind. Besonders bevorzugt sind die unmittelbar vorstehenden Merkmale a. und c. und d. in Kombination realisiert.

Auch das ringförmige Kunststoffteil kann ein Spritzgussteil sein. Die Dicke des Kunststoffteils liegt bevorzugt in einem Bereich von 20 µm bis 600 µm.

Das Kunststoffteil kann beispielsweise aus kann beispielsweise aus Teflon, aus Polyamid, aus Polybutylenterephtalat oder aus einem Perfluoralkoxy-Polymer gefertigt sein.

In einer vierten bevorzugten Weiterbildung dieser bevorzugten Ausführungsform zeichnet sich das erfindungsgemäße Energiespeicherelement durch mindestens eines der unmittelbar folgenden Merkmale a. bis d. aus:
a. Das mindestens eine Isolierelement ist oder umfasst eine elektrisch isolierende Kunststoffbeschichtung, die einen Rand des Kontaktmetallblechs umschließt und diesen vor einem unmittelbaren Kontakt mit der Innenseite des becherförmig ausgebildeten Gehäuseteils, insbesondere im Bereich der Einbuchtung, schützt.
b. Die elektrisch isolierende Beschichtung ist durch Umspritzen des Randes des Kontaktmetallblechs gebildet.

Es ist bevorzugt, dass die unmittelbar vorstehenden Merkmale a. und b. in Kombination realisiert sind.

Zum Umspritzen des Randes des Kontaktmetallblechs eignen sich im Grunde alle thermoplastischen Kunststoffe mit elektrisch isolierenden Eigenschaften. Geeignet ist beispielsweise Polyamid.

Erfindungsgemäß sind auch Kombinationen der beschriebenen vier besonders bevorzugten Ausführungsformen. So zeichnet sich das Energiespeicherelement besonders bevorzugt durch eine Kombination von zwei oder mehr der vier unmittelbar folgenden Merkmale a. bis d. aus:
a. Das mindestens eine Isolierelement umfasst ein Isolierband oder ringförmiges Formteil aus Kunststoff, das auf die Kante, welche die Stirnseite begrenzt, aufgebracht ist und diese vor einem unmittelbaren Kontakt mit der Innenseite schützt, also ein Isolierband oder ein ringförmiges Formteil gemäß der ersten besonders bevorzugten Ausführungsform, und/oder
b. das mindestens eine Isolierelement umfasst ein ringförmiges Isolierelement, das an der Innenseite des becherförmig ausgebildeten Gehäuseteils im Bereich der Einbuchtung anliegt und diese vor einem unmittelbaren Kontakt mit dem Kontaktmetallblech schützt, also ein ringförmiges Isolierelement gemäß der zweiten besonders bevorzugten Ausführungsform, und/oder
c. das mindestens eine Isolierelement umfasst ein ringförmiges Kunststoffteil, das das Kontaktmetallblech umschließt und dieses vor einem unmittelbaren Kontakt mit der Innenseite des becherförmig ausgebildeten Gehäuseteils im Bereich der Einbuchtung schützt, also ein ringförmiges Kunststoffteil gemäß der dritten besonders bevorzugten Ausführungsform, und/oder
d. das mindestens eine Isolierelement ist oder umfasst eine elektrisch isolierende Kunststoffbeschichtung, die einen Rand des Kontaktmetallblechs umschließt und diesen vor einem unmittelbaren Kontakt mit der Innenseite des becherförmig ausgebildeten Gehäuseteils, insbesondere im Bereich der Einbuchtung, schützt, also eine Kunststoffbeschichtunggemäß der vierten besonders bevorzugten Ausführungsform.

Es ist bevorzugt, dass sich das erfindungsgemäße Energiespeicherelement durch mindestens eines der folgenden Merkmale a. bis c. auszeichnet:
a. Das becherförmig ausgebildete Gehäuseteil weist in dem Zentralabschnitt und dem Verschlussabschnitt einen identischen maximalen Außendurchmesser auf.
b. Im Bereich der Einbuchtung ist der Außendurchmesser des becherförmig ausgebildeten Gehäuseteils um das 4- bis 20-fache der Wandstärke des becherförmig ausgebildeten Gehäuseteils in diesem Bereich reduziert.

Es ist bevorzugt, dass die unmittelbar vorstehenden Merkmale a. und b. in Kombination realisiert sind.

### Zellverschluss durch Vergussmasse

In einer besonders bevorzugten Ausführungsform zeichnet sich das erfindungsgemäße Energiespeicherelement durch die unmittelbar folgenden Merkmale a. bis g. aus:
a. Es umfasst ein luft- und flüssigkeitsdicht verschlossenes Gehäuse, das ein metallisches, becherförmig ausgebildetes Gehäuseteil mit einem Boden und einer endständigen Öffnung sowie einen Deckel, welche die endständige Öffnung verschließt, aufweist.
b. Der Deckel umfasst eine metallische Deckelplatte und einen Anschlusspol, der durch eine Durchbrechung in der Deckelplatte geführt und gegenüber der Deckelplatte elektrisch isoliert ist,
c. In dem becherförmig ausgebildeten Gehäuseteil ist der Verbundkörper angeordnet, wobei dieser mit einer Seite in Richtung des Deckels und mit einer zweiten Seite in Richtung des Bodens weist, gegebenenfalls unmittelbar mit dem Boden in Kontakt steht.
d. Der die Kathode und die Anode sind derart ausgebildet und/oder innerhalb desVerbundkörpers derart zueinander angeordnet, dass der freie Randstreifen des Kathodenstromkollektors aus der Seite des Verbundkörpers und der freie Randstreifen des Anodenstromkollektors aus einer Seite des Verbundkörpers austritt, und
e. Das Kontaktmetallblech sitzt unmittelbar auf dem freien Randstreifen eines der aus einer der Seiten des Verbundkörpers austretenden Stromkollektoren auf und ist mit diesem durch Verschweißung verbunden.
f. Das Kontaktmetallblech ist entweder mit dem durch die Durchbrechung in der Deckelplatte geführten Anschlusspol elektrisch verbunden, vorzugsweise unmittelbar mit dem Anschlusspol unmittelbar verschweißt, oder der Anschlusspol ist ein Teil des Kontaktmetallblechs.
g. Der Anschlusspol ist durch eine ausgehärtete Vergussmasse aus einem elektrisch isolierenden Kunststoffmaterial von der Deckelplatte elektrisch isoliert.

Ein Deckel dieser Ausgestaltung gewährleistet, dass sich zwischen dem Verbundkörper und der metallischen Deckelplatte im Grunde überhaupt kein Totvolumen findet. Jeglicher Raum zwischen dem Kontaktmetallblech, dem Anschlusspol und der Deckelplatte kann mit der Vergussmasse gefüllt werden. Ein Deckel mit den genannten Merkmalen kann sehr kompakt gebaut werden.

Weiterhin hat ein Energiespeicherelement mit den unmittelbar vorstehenden Merkmalen a. bis g. den Vorteil, dass es möglich ist, über den Deckel sowohl die Anode als auch die Kathode elektrisch zu kontaktieren.

In einer bevorzugten Weiterbildung dieser Ausführungsform zeichnet sich das erfindungsgemäße Energiespeicherelement durch das unmittelbar folgende Merkmal a. aus:
a. Der nicht mit dem Kontaktmetallblech in unmittelbarem Kontakt stehende Randstreifen des Kathodenstromkollektors oder des Anodenstromkollektors ist elektrisch mit dem Gehäuseboden verbunden, bevorzugt unmittelbar an den Gehäuseboden geschweißt.

In vielen Fällen ist es bei dieser Ausführungsform bevorzugt, dass das becherförmig ausgebildete Gehäuseteil positiv gepolt ist und der Anschlusspol ein negativer Anschlusspol ist. In diesen Fällen zeichnet sich das erfindungsgemäße Energiespeicherelement durch das unmittelbar folgende Merkmal a., gegebenenfalls in Kombination mit mindestens einem weiteren der unmittelbar folgenden Merkmale b. und c., aus:
a. Das becherförmig ausgebildete Gehäuseteil ist elektrisch mit der Kathode verbunden.
b. Das becherförmig ausgebildete Gehäuseteil besteht aus Aluminium oder einer Aluminiumlegierung.
c. Die Deckelplatte besteht aus Aluminium oder einer Aluminiumlegierung.

Besonders bevorzugt sind die unmittelbar vorstehenden Merkmale a. bis c. in Kombination realisiert.

In dieser Ausführungsform besteht das Gehäuse des Energiespeicherelements in wesentlichen Teilen aus Aluminium oder aus einer Aluminiumlegierung. Dies hat diverse Vorteile. Die Ausbildung von Lokalelementen bei einem Kontakt der Außenseite der Zelle mit Feuchtigkeit ist ausgeschlossen. Das Gehäuse selbst kann im Grunde auf allen seinen Seiten als positiver Anschlusspol dienen. Besonders bevorzugt wird die Zelle allerdings ausschließlich über den Deckel kontaktiert, wo sich ja auch der negative Anschlusspol befindet. Hierzu kann ein Stromleiter unmittelbar an die Deckelplatte geschweißt werden oder alternativ an dem separaten Anschlusspol fixiert werden, beispielsweise mittels Verschweißung.

In weiteren Fällen kann es bevorzugt sein, dass das becherförmig ausgebildete Gehäuseteil negativ gepolt ist und der Anschlusspol ein positiver Anschlusspol ist. In diesen Fällen zeichnet sich das erfindungsgemäße Energiespeicherelement durch das unmittelbar folgende Merkmal a., gegebenenfalls in Kombination mit mindestens einem weiteren der unmittelbar folgenden Merkmale b. und c., aus:
a. Das becherförmig ausgebildete Gehäuseteil ist elektrisch mit der Anode verbunden.
b. Das becherförmig ausgebildete Gehäuseteil besteht aus Aluminium oder einer Aluminiumlegierung.
c. Die Deckelplatte besteht aus Aluminium oder einer Aluminiumlegierung.

Besonders bevorzugt sind die unmittelbar vorstehenden Merkmale a. bis c. in Kombination realisiert.

In bevorzugten Ausführungsformen zeichnet sich das erfindungsgemäße Energiespeicherelement durch mindestens eines der unmittelbar folgenden Merkmale a. und b. aus:
a. Zwischen der Deckelplatte und dem Kontaktmetallblech befindet sich ein ringförmiger Spalt, der mit der Vergussmasse befüllt ist.
b. Der ringförmige Spalt wird radial nach außen durch eine O-Ring-förmige Isolierscheibe aus einem elektrisch isolierenden Kunststoffmaterial begrenzt.

In weiteren besonders bevorzugten Ausführungsformen zeichnet sich das erfindungsgemäße Energiespeicherelement durch mindestens eines der unmittelbar folgenden Merkmale a. bis c. aus:
a. Das Kontaktmetallblech besteht aus Aluminium oder aus einer Aluminiumlegierung.
b. Der Anschlusspol besteht aus Aluminium oder einer Aluminiumlegierung.
c. Das Kontaktmetallblech und der Anschlusspol und Kathodenstromkollektor bestehen aus dem gleichen Material.

In Ausführungsformen, bei denen der Anschlusspol ein Teil des Kontaktmetallblechs ist, dient das Kontaktmetallblech gleichzeitig als Ableiter für den Strom aus dem Anoden- oder Kathodenstromkollektor und als Pol. Entsprechend bedarf es keines separaten elektrischen Leiters, wie er aus dem Stand der Technik bekannt ist, und dort in der Regel zwischen einem Deckel oder einer Deckelbaugruppe und einer Kontaktplatte, wie sie in der WO 2017/215900 A1 beschrieben ist, angeordnet ist.

Das Kontaktmetallblech umfasst in dieser Ausführungsform bevorzugt einen flachen Bereich, der unmittelbar auf dem freien Randstreifen eines der aus einer der Seiten des Verbundkörpers austretenden Stromkollektoren aufsitzt und mit diesem durch Verschweißung verbunden ist, und einen von der dieser Seite weg weisenden Vorsprung. Der Vorsprung dient als der Anschlusspol und ist bevorzugt durch die Durchbrechung in der Deckelplatte geführt.

Bevorzugt zeichnet sich das Kontaktmetallblech durch mindestens eines der unmittelbar folgenden Merkmale a. und b. aus:
a. Der von der ersten endständigen Stirnseite weg weisende Vorsprung des Metallteils ist napfförmig ausgebildet.
b. Das Kontaktmetallblech einschließlich des Vorsprungs ist einstückig ausgebildet.

Es ist bevorzugt, dass die unmittelbar vorstehenden Merkmale a. und b. in Kombination realisiert sind.

Das Kontaktmetallblech mit dem napfförmigen Vorsprung kann beispielsweise in einem Tiefziehprozess hergestellt werden, es ist dann zugleich bevorzugt einstückig ausgebildet. Es kann aber beispielsweise auch durch einen umformenden oder spanenden Fertigungsschritt aus einem metallischen Werkstück oder mittels 3D-Druck gefertigt werden.

In einer besonders bevorzugten Ausführungsform der Erfindung zeichnet sich das erfindungsgemäße Energiespeicherelement durch die folgenden Merkmale a. und b. aus:
a. der Gehäuseboden des becherförmig ausgebildeten Gehäuseteils weist eine Primärsicherung gegen internen Überdruck in Form einer Durchbrechung, die mittels einer metallischen Membran verschlossen ist, auf.
b. der Gehäuseboden des becherförmig ausgebildeten Gehäuseteils weist eine Sekundärsicherung gegen internen Überdruck in Form mindestens einer Nut auf seiner Innenseite oderseiner Außenseite auf.

Die Primärsicherung hat die Funktion, beim Auftreten eines unzulässigen Überdrucks oberhalb eines definierten Schwellwerts einen kontrollierten Druckausgleich herbeizuführen. Die Membran wird in diesem Fall durch den Druck aufgesprengt oder abgesprengt, im Gehäuseinneren gebildetes Gas kann durch die Durchbrechung im Gehäuseboden entweichen.

Die Sekundärsicherung ist für Fälle vorgesehen, bei denen ein Druckausgleich über die Primärsicherung nicht schnell genug erfolgt. In diesem Fall kann der Gehäuseboden bedingt durch den Überdruck entlang der Nut, die nichts anderes als eine Schwächung der Struktur des Gehäusebodens darstellt, aufreißen, so dass eine Austrittsöffnung mit vergleichsweise großem Querschnitt entsteht, über den im Gehäuseinneren gebildetes Gas entweichen kann.

Solche Sicherungslösungen sind für sich genommen bereits bekannt. Durch geeignete Ausbildung der Nut und der Membran kann präzise eingestellt werden, bei welchem Druck die Sicherungen auslösen.

Da die genannten Sicherheitsfunktionen nicht-wie bei vielen klassischen Zellen - im Deckel sondern stattdessen im Gehäuseboden integriert sind, ist es möglich, den Deckel äußerst kompakt zu bauen. Es ist auch nicht zwingend eine Vorassemblierung des Deckels erforderlich. Der Deckel kann vielmehr bei der Gehäusemontage hergestellt werden.

In besonders bevorzugten Ausführungsformen zeichnet sich das erfindungsgemäße Energiespeicherelement durch mindestens eines der unmittelbar folgenden Merkmale a. bis e. aus:
a. Die Deckelplatte ist in die endständige Öffnung des becherförmig ausgebildeten Gehäuseteils eingeschweißt.
b. Das Kontaktmetallblech ist mit dem Kontaktmetallblech des Anodenstromkollektors oder dem freien Randstreifen des Kathodenstromkollektors durch Verschweißung verbunden.
c. Der nicht mit dem Kontaktmetallblech in unmittelbarem Kontakt stehende freie Randstreifen sitzt unmittelbar auf dem Gehäuseboden auf.
d. Der nicht mit dem Kontaktmetallblech in unmittelbarem Kontakt stehende freie Randstreifen ist durch Verschweißung mit dem Gehäuseboden verbunden.
e. Die mindestens eine Nut findet sich auf der Innenseite des Gehäusebodens.

Bevorzugt sind die unmittelbar vorstehenden Merkmale a. bis d. in Kombination realisiert, besonders bevorzugt die unmittelbar vorstehenden Merkmale a. bis e..

In einer weiteren besonders bevorzugten Ausführungsform der Erfindung zeichnet sich das erfindungsgemäße Energiespeicherelement durch das folgende Merkmal a. aus:
a. Die metallische Membran ist durch Verschweißung am Boden des becherförmig ausgebildeten Gehäuseteils fixiert.

Der Boden des becherförmigen Gehäuseteils kann eine flache Vertiefung aufweisen, in die die Membran eingelegt wird, so dass sie nicht aufträgt. Bevorzugt ist sie über eine kreisförmige Schweißnaht, die um die Durchbrechung im Boden herumgeführt ist, mit dem Boden verbunden.

Die Dicke der Membran kann an den Druck, bei dem die Sicherung auslösen soll, angepasst werden.

In bevorzugten Ausführungsformen zeichnet sich das erfindungsgemäße Energiespeicherelement durch mindestens eines der unmittelbar folgenden Merkmale a. bis g. aus:
a. Der Gehäuseboden weist mindestens eine Sicke auf, die auf seiner Außenseite als längliche Vertiefung und auf seiner Innenseite als längliche Erhöhung zu Tage tritt, wobei der nicht mit dem Kontaktmetallblech in unmittelbarem Kontakt stehende Randstreifen des Kathodenstromkollektors oder des Anodenstromkollektors auf der Innenseite aufsitzt.
b. Der nicht mit dem Kontaktmetallblech in unmittelbarem Kontakt stehende Randstreifen des Kathodenstromkollektors oder des Anodenstromkollektors ist elektrisch mit dem Gehäuseboden verbunden, bevorzugt unmittelbar an den Gehäuseboden geschweißt.
c. Der Gehäuseboden ist im Bereich der Sicke mit dem freien Randstreifen des Anodenstromkollektors oder dem freien Randstreifen des Kathodenstromkollektors verschweißt.
d. Die Durchbrechung ist im Zentrum des Gehäusebodens positioniert.
e. Die mindestens eine Sicke umfasst mehrere lineare Sicken, insbesondere drei Sicken, die in sternförmiger Anordnung um die Durchbrechung herum angeordnet sind.
f. Die mindestens eine Sicke umfasst mehrere lineare Teilabschnitte, die in sternförmiger Anordnung um die Durchbrechung herum angeordnet sind.
g. Die mindestens eine Sicke umfasst einen um die Durchbrechung herumlaufenden Teilabschnitt, der die sternförmig angeordneten linearen Teilabschnitte miteinander verbindet.

Bevorzugt sind die unmittelbar vorstehenden Merkmale a. und b., c. und d. sowie c. und e. und f. in Kombination realisiert. Besonders bevorzugt sind die unmittelbar vorstehenden Merkmale a. bis g. in Kombination realisiert

In Folge der Verschweißung im Bereich der Sicke finden sich in dieser bevorzugt ein oder mehrere Schweißnähte. Die sternförmig angeordneten Sicken und die sternförmig angeordneten linearen Teilabschnitte der Nut schließen bevorzugt jeweils einen Winkel von 120° ein.

Es hat sich in einigen Ausführungsformen als vorteilhaft erwiesen, den freien Randstreifen des Stromkollektors, der auf der Innenseite des Gehäusebodens aufsitzt, einer Vorbehandlung zu unterziehen, damit der Kontakt zwischen dem Gehäuseboden und dem Stromkollektor verbessert wird. Insbesondere kann in den Rand mindestens eine Vertiefung eingefalzt werden, die zu der mindestens einen Sicke korrespondiert.

Der Rand des Stromkollektors kann auch durch eine Vorbehandlung einer gerichteten Umformung unterzogen worden sein. Beispielsweise kann er in eine definierte Richtung umgebogen sein.

### Erfindungsgemäße Batterie

Energiespeicherelemente des erfindungsgemäßen Typs, insbesondere basierend auf Natrium-Ionen-Technologie, bieten nicht nur hohe Leistungsdichten, sie sind auch schnellladefähig, performant bei tiefen Temperaturen und bieten eine ausgezeichnete Zyklenstabilität. Darüber hinaus steht beispielsweise Natrium in praktisch unbegrenzten Mengen zur Verfügung.

Aus all diesen Gründen eignen sich erfindungsgemäße Energiespeicherelemente, insbesondere solche auf Basis von Natrium-Ionen-Technologie, hervorragend zur Verwendung in Starterbatterien, die als Ersatz von Bleiakkumulatoren beispielsweise in Kraftfahrzeugen dienen können.

### Die vorliegend beschriebene Erfindung umfasst entsprechend

- jede Batterie, die zwei oder mehr in Serie und/oder parallel miteinander verschaltete erfindungsgemäße Energiespeicherelement, insbesondere solche auf Basis von Natrium-Ionen-Technologie, aufweist.

Besonders bevorzugt umfasst die erfindungsgemäße Batterie eine Mehrzahl erfindungsgemäßer Energiespeicherelemente, die derart miteinander verschaltet sind, dass die Batterie eine Spannung von 12 Volt oder von 24 Volt liefert.

Typischerweise liefert ein erfindungsgemäßes Energiespeicherelement auf Basis von Natrium-Ionen-Technologie eine Nennspannung im Bereich von 1,5 Volt bis 4,8 Volt, bevorzugt von 2,4 Volt bis 4 Volt. Entsprechend umfasst eine erfindungsgemäße Batterie mit 12 V Nennspannung bevorzugt 3 bis 5 in Reihe geschaltete erfindungsgemäße Energiespeicherelemente.

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

### Kurzbeschreibung der Zeichnungen

### In den Zeichnungen zeigen schematisch

- Fig. 1 eine erste Ausführungsform eines erfindungsgemäßen Energiespeicherelements des Natrium-Ionen-Typs (Querschnittsdarstellung),
- Fig. 2 eine zweite Ausführungsform einer erfindungsgemäßen Energiespeicherelements des Natrium-Ionen-Typs,
- Fig. 3 eine dritte Ausführungsform eines erfindungsgemäßen Energiespeicherelements des Natrium-Ionen-Typs (Querschnittsdarstellung),
- Fig. 4 mehrere Ausführungsformen eines Kontaktmetallblechs, das sich zur Kontaktierung des ersten Längsrands des aus der ersten endständigen Stirnseite austretenden Stromkollektors eines erfindungsgemäßen Energiespeicherelements des Natrium-Ionen-Typs eignet (perspektivische Darstellung),
- Fig. 5 einen Verbundkörper, der Bestandteil eines erfindungsgemäßen Energiespeicherelements des Natrium-Ionen-Typs ist, sowie dessen Komponenten (Draufsicht bzw. perspektivische Darstellung),
- Fig. 6 weitere Ausführungsformen des Kontaktmetallblechs, das sich zur Kontaktierung des ersten Längsrands des aus der ersten endständigen Stirnseite austretenden Stromkollektors eines erfindungsgemäßen Energiespeicherelements des Natrium-Ionen-Typs eignet (perspektivische Darstellung),
- Fig. 7 Darstellungen einer Ausführungsform eines erfindungsgemäßen Energiespeicherelements von außen und in einem Längsschnitt,
- Fig. 8 Detaildarstellungen des oberen und des unteren stirnseitigen Bereichs einer Ausführungsform eines erfindungsgemäßen Energiespeicherelements in einem Längsschnitt,
- Fig. 9A,B Detaildarstellungen eines Anschlusspols für eine bevorzugte Ausführungsform eines erfindungsgemäßen Energiespeicherelements in einer Ansicht schräg von oben und in einer Schnittansicht,
- Fig. 10A,B Detaildarstellungen einer Isolierscheibe für eine bevorzugte Ausführungsform eines erfindungsgemäßen Energiespeicherelements gemäß einer der Figuren 7 bis 9 in einer Ansicht schräg von oben und in einer Schnittansicht,
- Fig. 11A,B Detaildarstellungen eines Kontaktmetallblechs für die in Fig. 7 dargestellte bevorzugte Ausführungsform eines erfindungsgemäßen Energiespeicherelements in einer Ansicht schräg von oben und in einer Schnittansicht schräg von unten,
- Fig. 12 Detaildarstellung des Gehäusebodens einer bevorzugten Ausführungsform eines erfindungsgemäßen Energiespeicherelements gemäß Fig. 7,
- Fig. 13A-C Darstellungen der verschiedenen Komponenten einer bevorzugten Ausführungsform eines erfindungsgemäßen Energiespeicherelements gemäß Fig. 7 in Explosionsansichten,
- Fig. 14A,B Detaildarstellungen aus dem oberen stirnseitigen Bereich einer bevorzugten Ausführungsform eines erfindungsgemäßen Energiespeicherelements gemäß zur Illustrierung eines möglichen Verfahrens zur Herstellung des Energiespeicherelements,
- Fig. 15 Darstellung einer bevorzugten Ausführungsform eines erfindungsgemäßen Energiespeicherelements schräg von oben auf den Gehäuseboden zur Illustrierung eines Verfahrens zur Herstellung des Energiespeicherelements,
- Fig. 16A,B Alternative Ausführungsform eines Kontaktmetallblechs mit daran angefügtem Anschlusspol und deren Einbau in eine bevorzugte Ausführungsform eines erfindungsgemäßen Energiespeicherelements in Schnittansichten, und
- Fig. 17 Beispiel einer Deckelbaugruppe, die beispielsweise als Deckel bei einem erfindungsgemäßen Energiespeicherelement gemäß Fig. 1 oder Fig. 2 oder Fig. 3 verbaut werden kann.

### Detaillierte Beschreibung der Ausführungsbeispiele

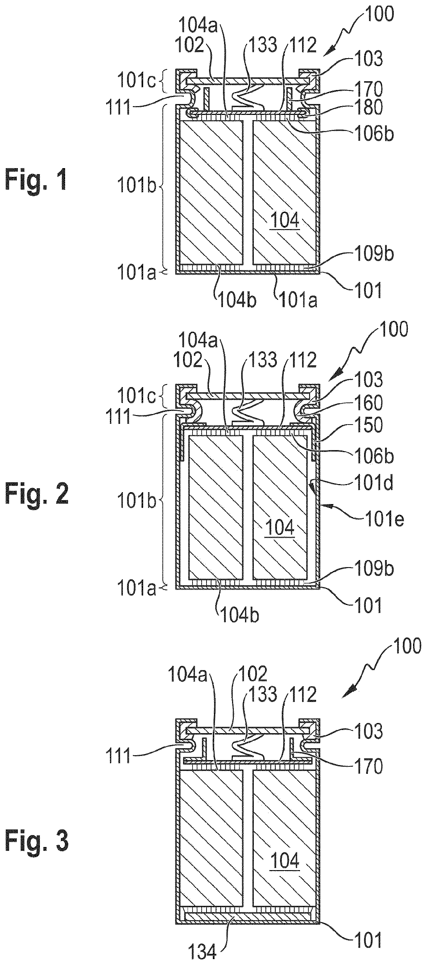

**Fig. 1** zeigt ein erfindungsgemäßes Energiespeicherelement 100 mit einem luft- und flüssigkeitsdicht verschlossenen Gehäuse, das ein metallisches, becherförmig ausgebildetes Gehäuseteil 101 mit einer endständigen kreisförmigen Öffnung und einen Deckel 102 mit einem kreisförmigen Rand 102a, welche die kreisförmige Öffnung verschließt, umfasst. Das Energiespeicherelement umfasst weiterhin eine ringförmige Dichtung 103 aus einem elektrisch isolierenden Material, die den kreisförmigen Rand 102a des Deckels 102 umschließt und das becherförmig ausgebildete Gehäuseteil 101 und den Deckel 102 elektrisch voneinander isoliert.

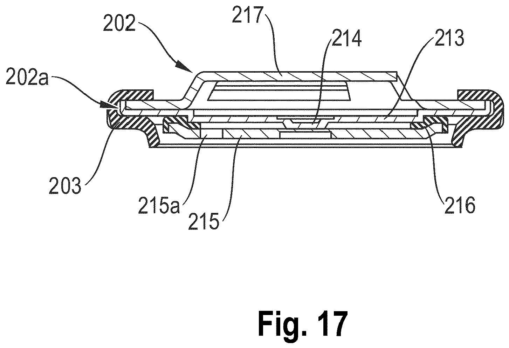

Der Deckel ist lediglich in Form einer Scheibe dargestellt. Regelmäßig werden als Deckel aber mehrteilige Deckelbaugruppen verwendet, beispielsweise die in Fig. 17 dargestellte.

Das becherförmig ausgebildete Gehäuseteil 101 umfasst in axialer Abfolge einen Boden 101a, einen Zentralabschnitt 101b und einen Verschlussabschnitt 101c, wobei der Zentralabschnitt 101b zylindrisch ausgebildet ist und in dem Zentralabschnitt 101b der Wickelmantel 104c des als Wickel ausgebildeten Verbundkörpers 104 mit der Innenseite 101d des becherförmig ausgebildeten Gehäuseteils 101 in Kontakt steht, und in dem Verschlussabschnitt 101c die ringförmige Dichtung 103 in einem Presskontakt mit dem Deckel 102 und der Innenseite des becherförmig ausgebildeten Gehäuseteils 101 steht. Der Zentralabschnitt 101b und der Verschlussabschnitt 101c sind durch eine Einbuchtung 111, welche die Außenseite 101e des becherförmig ausgebildeten Gehäuseteils 101 ringförmig umläuft, getrennt.

Der Verbundkörper 104 in Form eines zylindrischen Wickels mit der Sequenz Anode / Separator / Kathode ist hier nicht detailliert dargestellt. Zu erkennen sind lediglich der Längsrand 106a des Anodenstromkollektors 106, der aus der Stirnseite 104a des Verbundkörpers 104 austritt, und der Längsrand 109a des Kathodenstromkollektors 109, der aus der Stirnseite 104b des Verbundkörpers 104 austritt. Der Längsrand 109a ist, bevorzugt über seine gesamte Länge, unmittelbar mit dem Gehäuseboden 101a verschweißt. Der Längsrand 106a ist, bevorzugt über seine gesamte Länge, unmittelbar mit dem Kontaktmetallblech 112 verschweißt. Das Kontaktmetallblech 112 ist wiederum über den elektrischen Leiter 133 mit dem Deckel 102 verbunden.

Das Energiespeicherelement 100 weist bevorzugt eine Höhe im Bereich von 60 mm bis 100 mm auf, sein Durchmesser liegt bevorzugt im Bereich von 20 mm bis 50 mm. Das becherförmig ausgebildete Gehäuseteil 101 weist in dem Zentralabschnitt 101b typischerweise eine Wandstärke im Bereich von 0,1 mm bis 0,3 mm auf.

Das Energiespeicherelement umfasst als Isolierelement eine elektrisch isolierende Kunststoffbeschichtung 180, die den Rand des Kontaktmetallblechs 112 umschließt und diesen vor einem unmittelbaren Kontakt mit der Innenseite 101d des becherförmig ausgebildeten Gehäuseteils 101, insbesondere im Bereich der Einbuchtung 111, schützt. Die elektrisch isolierende Beschichtung 180 ist durch Umspritzen des Randes des Kontaktmetallblechs 112 gebildet. Weiterhin umfasst das Energiespeicherelement 100 als Isolierelement ein ringförmiges Kunststoffteil 170, das den an dem Kontaktmetallblech fixierten separaten elektrischen Leiter 133, umschließt und diesen voreinem unmittelbaren Kontakt mit der Innenseite 101d des becherförmig ausgebildeten Gehäuseteils 101 im Bereich der Einbuchtung 111 schützt.

In der Folge ist das Energiespeicherelement 100 auch im Fall einer Deformation des Gehäuses in Folge einer von außen wirkenden mechanischen Kraft hervorragend vor Kurzschlüssen geschützt.

**Fig. 2** zeigt ein erfindungsgemäßes Energiespeicherelement 100 mit einem luft- und flüssigkeitsdicht verschlossenen Gehäuse, das ein metallisches, becherförmig ausgebildetes Gehäuseteil 101 mit einer endständigen kreisförmigen Öffnung und einem Deckel 102 mit einem kreisförmigen Rand 102a, welche die kreisförmige Öffnung verschließt, umfasst. Das Energiespeicherelement umfasst weiterhin eine ringförmige Dichtung 103 aus einem elektrisch isolierenden Material, die den kreisförmigen Rand 102a des Deckels 102 umschließt und das becherförmig ausgebildete Gehäuseteil 101 und den Deckel 102 elektrisch voneinander isoliert.

Der Deckel ist lediglich in Form einer Scheibe dargestellt. Regelmäßig werden als Deckel aber mehrteilige Deckelbaugruppen verwendet, beispielsweise die in Fig. 17 dargestellte.

Das becherförmig ausgebildete Gehäuseteil 101 umfasst in axialer Abfolge einen Boden 101a, einen Zentralabschnitt 101b und einen Verschlussabschnitt 101c, wobei der Zentralabschnitt 101b zylindrisch ausgebildet ist und in dem Zentralabschnitt 101b der Wickelmantel 104c des als Wickel ausgebildeten Verbundkörpers 104 mit der Innenseite 101d des becherförmig ausgebildeten Gehäuseteils 101 in Kontakt steht (Achtung: Ausschließlich aus Gründen der Übersichtlichkeit ist derVerbundkörper 104 vorliegend beabstandet von der Innenseite 101d gezeichnet, tatsächlich aber presst er gegen sie, wie es beispielsweise in Fig. 1 dargestellt ist), und in dem Verschlussabschnitt 101c die ring-förmige Dichtung 103 in einem Presskontakt mit dem Deckel 102 und der Innenseite des becherförmig ausgebildeten Gehäuseteils 101 steht. Der Zentralabschnitt 101b und der Verschlussabschnitt 101c sind durch eine Einbuchtung 111, welche die Außenseite 101e des becherförmig ausgebildeten Gehäuseteils 101 ringförmig umläuft, getrennt.

Der Verbundkörper 104 in Form eines zylindrischen Wickels mit der Sequenz Anode / Separator / Kathode ist hier nicht detailliert dargestellt. Zu erkennen sind lediglich der Längsrand 106a des Anodenstromkollektors 106, der aus der Stirnseite 104a des Verbundkörpers 104 austritt, und der Längsrand 109a des Kathodenstromkollektors 109, der aus der Stirnseite 104b des Verbundkörpers 104 austritt. Der Längsrand 109a ist, bevorzugt über seine gesamte Länge, unmittelbar mit dem Gehäuseboden 101a verschweißt. Der Längsrand 106a ist, bevorzugt über seine gesamte Länge, unmittelbar mit dem Kontaktmetallblech 112 verschweißt. Das Kontaktmetallblech 112 ist wiederum über den elektrischen Leiter 133 mit dem Deckel 102 verbunden.

Das Energiespeicherelement 100 weist bevorzugt eine Höhe im Bereich von 60 mm bis 100 mm auf, ihr Durchmesser liegt bevorzugt im Bereich von 20 mm bis 50 mm. Das becherförmig ausgebildete Gehäuseteil 101 weist in dem Zentralabschnitt 101b typischerweise eine Wandstärke im Bereich von 0,1 mm bis 0,3 mm auf.

Das Energiespeicherelement umfasst als Isolierelement ein ringförmiges Formteil aus Kunststoff 150 mit L-förmigem Querschnitt, das auf die Kante, welche die Stirnseite 104a begrenzt, aufgebracht ist und diese vor einem unmittelbaren Kontakt mit der Innenseite 101d des becherförmig ausgebildeten Gehäuseteils 101 schützt. Weiterhin umfasst das Energiespeicherelement ein ringförmiges Isolierelement 160 aus Kunststoff, das an der Innenseite 101d des becherförmig ausgebildeten Gehäuseteils 101 im Bereich der Einbuchtung 111 anliegt und diese vor einem unmittelbaren Kontakt mit dem elektrischen Leiter 133 schützt. Hierbei kann es sich auch um einen Teilabschnitt der ringförmigen Dichtung 103 handeln, die ausreichend hoch ausgebildet sein kann, um auch die Einbuchtung 111 von innen abzudecken.

In der Folge ist das Energiespeicherelement 100 auch im Fall einer Deformation des Gehäuses in Folge einer von außen wirkenden mechanischen Kraft hervorragend vor Kurzschlüssen geschützt.

An Stelle des ringförmigen Formteils aus Kunststoff 150 mit L-förmigem Querschnitt kann die Kante, welche die Stirnseite 104a begrenzt, auch mit einem Isolierband, beispielsweise einem Kaptonband 150, abgedeckt werden. Dieses kann im Idealfall bereits bei der Bildung des Wickels auf die Kante aufgebracht werden und schützt die Kante ebenso effizient vor einem unmittelbaren Kontakt mit der Innenseite 101d.

**Fig. 3** zeigt ein erfindungsgemäßes Energiespeicherelement 100 mit einem luft- und flüssigkeitsdicht verschlossenen Gehäuse, das ein metallisches, becherförmig ausgebildetes Gehäuseteil 101 mit einer endständigen kreisförmigen Öffnung und einem Deckel 102 mit einem kreisförmigen Rand 102a, welche die kreisförmige Öffnung verschließt, umfasst. Das Energiespeicherelement umfasst weiterhin eine ringförmige Dichtung 103 aus einem elektrisch isolierenden Material, die den kreisförmigen Rand 102a des Deckels 102 umschließt und das becherförmig ausgebildete Gehäuseteil 101 und den Deckel 102 elektrisch voneinander isoliert.

Der Deckel ist lediglich in Form einer Scheibe dargestellt. Regelmäßig werden als Deckel aber mehrteilige Deckelbaugruppen verwendet, beispielsweise die in Fig. 17 dargestellte.

Das becherförmig ausgebildete Gehäuseteil 101 umfasst in axialer Abfolge einen Boden 101a, einen Zentralabschnitt 101b und einen Verschlussabschnitt 101c, wobei der Zentralabschnitt 101b zylindrisch ausgebildet ist und in dem Zentralabschnitt 101b der Wickelmantel 104c des als Wickel ausgebildeten Verbundkörpers 104 mit der Innenseite 101d des becherförmig ausgebildeten Gehäuseteils 101 in Kontakt steht und in dem Verschlussabschnitt 101c die ringförmige Dichtung 103 in einem Presskontakt mit dem Deckel 102 und der Innenseite des becherförmig ausgebildeten Gehäuseteils 101 steht. Der Zentralabschnitt 101b und der Verschlussabschnitt 101c sind durch eine Einbuchtung 111, welche die Außenseite 101e des becherförmig ausgebildeten Gehäuseteils 101 ringförmig umläuft, getrennt.

Der Verbundkörper 104 in Form eines zylindrischen Wickels mit der Sequenz Anode / Separator / Kathode ist hier nicht detailliert dargestellt. Zu erkennen sind lediglich der Längsrand 106a des Anodenstromkollektors 106, der aus der Stirnseite 104a des Verbundkörpers 104 austritt, und der Längsrand 109a des Kathodenstromkollektors 109, der aus der Stirnseite 104b des Verbundkörpers 104 austritt. Der Längsrand 109a ist, bevorzugt überseine gesamte Länge, unmittelbar mit dem Kontaktmetallblech 134 verschweißt. Das Kontaktmetallblech 134 ist wiederum mit dem Boden 101a durch Verschweißung verbunden. Der Längsrand 106a ist, bevorzugt über seine gesamte Länge, unmittelbar mit dem Kontaktmetallblech 112 verschweißt. Das Kontaktmetallblech 112 ist wiederum über den elektrischen Leiter 133 mit dem Deckel 102 verbunden.

Das Energiespeicherelement 100 weist bevorzugt eine Höhe im Bereich von 60 mm bis 100 mm auf, ihr Durchmesser liegt bevorzugt im Bereich von 20 mm bis 50 mm. Der becherförmig ausgebildete Gehäuseteil 101 weist in dem Zentralabschnitt 101b typischerweise eine Wandstärke im Bereich von 0,1 mm bis 0,3 mm auf.

Das Energiespeicherelement umfasst als Isolierelement ein ringförmiges Kunststoffteil 170, das den elektrischen Leiter 133 seitlich umschließt und diesen vor einem unmittelbaren Kontakt mit der Innenseite 101d des becherförmig ausgebildeten Gehäuseteils 101 im Bereich der Einbuchtung 111 schützt. Das ringförmige Kunststoffteil 170 ist hohlzylindrisch ausgebildet, umfasst einen senkrecht zum Kontaktmetallblech 112 stehenden Mantel 171. Einer seiner Ränder ist als nach außen gerichteter ringförmiger Kragen 171 ausgebildet und sitzt auf dem Kontaktmetallblech 112 auf.

In der Folge ist das Energiespeicherelement 100 auch im Fall einer Deformation des Gehäuses in Folge einer von außen wirkenden mechanischen Kraft hervorragend vor Kurzschlüssen geschützt.

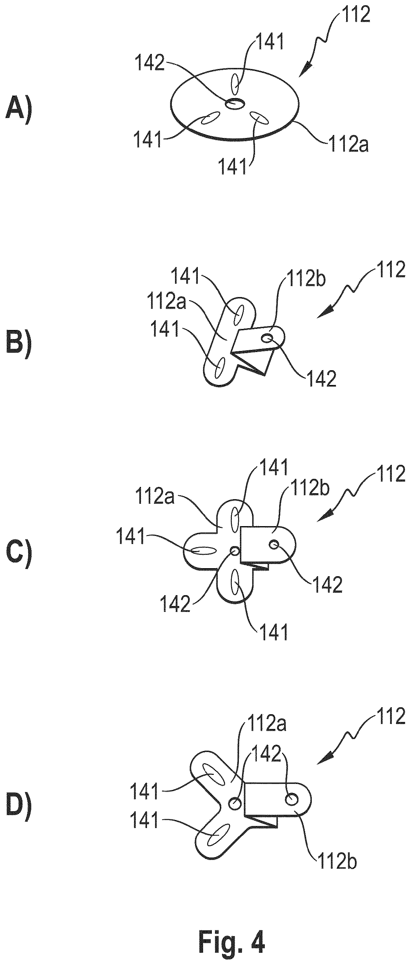

**Fig. 4** zeigt mehrere Ausführungsformen eines Kontaktmetallblechs 112, das sich zur Kontaktierung des ersten Längsrands 106a des aus der ersten endständigen Stirnseite 104a austretenden Stromkollektors 106 eines erfindungsgemäßen Energiespeicherelements 100 eignet.

Ausführungsform A zeigt als Kontaktmetallblech 112 eine kreisrunde und im Wesentlichen flache Metallscheibe mit einem umlaufenden Rand 102a. Diese zeichnet sich durch ein zentrales Loch 142 und drei versetzt angeordnete Sicken 141 aus. Ein solches Bauteil kann in den Energiespeicherelementen gemäß den Figuren 1 bis 3 jeweils zur elektrischen Kontaktierung der Randes 106a des Anodenstromkollektors 106 eingesetzt werden. Es eignet sich aber auch zur Verwendung als Kontaktmetallblech 134 in dem Energiespeicherelement gemäß Fig. 3. Bei Verwendung einer solchen Metallscheibe zur Kontaktierung des Längsrandes 106a ist in aller Regel der in den Figuren 1 bis 3 dargestellte separate Leiter 133 zwingend erforderlich um die Distanz zum Kontaktmetallblech 102 zu überbrücken.

Anders bei Ausführungsform B. Hier umfasst das Kontaktmetallblech 112 einen ersten Abschnitt 112a, der flach auf dem ersten Längsrand des aus der ersten endständigen Stirnseite 104a austretenden Stromkollektors aufsitzen kann und der sich dann parallel zur Stirnseite 104a erstreckt. Daneben umfasst es aber zusätzlich einen zweiten Abschnitt 112b, der sich abgewinkelt an den ersten Abschnitt 112a anschließt und über den der erste Abschnitt 112a elektrisch mit dem Deckel 102 verbunden ist. Bei Verwendung eines solchen Kontaktmetallblechs ist kein separater Leiter 133 erforderlich. Das Kontaktmetallblech 112 zeichnet sich weiterhin durch ein Loch 142 und zwei Sicken 141 aus. In diesen Sicken erfolgt bevorzugt die Verschweißung des Kontaktmetallblechs mit dem Längsrand des jeweiligen Stromkollektors.

Die Ausführungsformen C und D unterscheiden sich von Ausführungsform B darin, dass der Abschnitt 112a drei bzw. vier Streifen umfasst, die sich in unterschiedliche Richtungen erstrecken. Jeder der Streifen verfügt über eine Sicke 141. Daneben weisen die Blechteile jeweils zwei Löcher 142 auf.

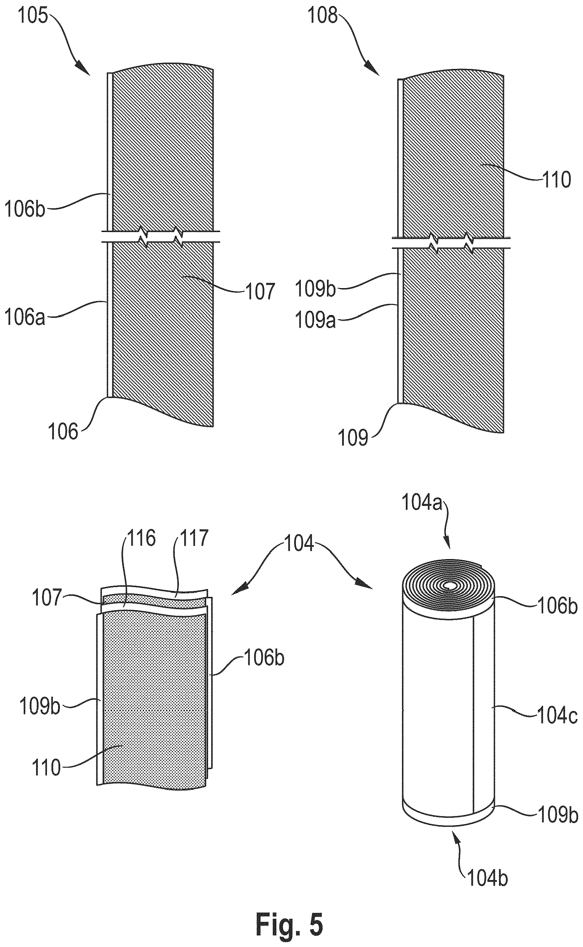

Der Aufbau des Verbundkörpers 104 wird anhand von **Fig. 5** veranschaulicht. Der Verbundkörper 104 umfasst die bandförmige Anode 105 mit dem bandförmigen Anodenstromkollektor 106, der einen ersten Längsrand 106a und einen dazu parallelen zweiten Längsrand aufweist. Bei dem Anodenstromkollektor 106 handelt es sich um eine Folie ausAluminium. Diese umfasst einen bandförmigen Hauptbereich, der mit einer Schicht aus negativem Elektrodenmaterial 107 beladen ist, sowie einen freien Randstreifen 106b, der sich entlang seines ersten Längsrands 106a erstreckt und der nicht mit dem Elektrodenmaterial 107 beladen ist. Weiterhin umfasst der Verbundkörper 104 die bandförmige Kathode 108 mit dem bandförmigen Kathodenstromkollektor 109, der einen ersten Längsrand 109a und einen dazu parallelen zweiten Längsrand aufweist. Bei dem Kathodenstromkollektor 109 handelt es sich ebenfalls um eine Aluminiumfolie. Er umfasst einen bandförmigen Hauptbereich, der mit einer Schicht aus positivem Elektrodenmaterial 110 beladen ist, sowie einen freien Randstreifen 109b, der sich entlang seines ersten Längsrands 109a erstreckt und der nicht mit dem Elektrodenmaterial 110 beladen ist. Beide Elektroden sind einzeln in ungewickeltem Zustand dargestellt.

Die Anode 105 und die Kathode 108 sind innerhalb des Verbundkörpers 104 versetzt zueinander angeordnet, so dass der erste Längsrand 106a des Anodenstromkollektors 106 aus der ersten endständigen Stirnseite 104a und der erste Längsrand 109a des Kathodenstromkollektors 109 aus der zweiten endständigen Stirnseite 104b des Verbundkörpers 104 austritt. Die versetzte Anordnung geht aus der Darstellung links unten hervor. Dort sind auch die zwei bandförmigen Separatoren 116 und 117 dargestellt, die im Wickel die Elektroden 105 und 108 voneinander trennen.

In der Darstellung rechts unten ist der Verbundkörper 104 in gewickelter Form dargestellt, wie er in einem Energiespeicherelement gemäß einer der Figuren 1 bis 4 zum Einsatz kommen kann. Die aus den Stirnseiten 104a und 104b austretenden Elektrodenränder 106a und 109a sind gut zu erkennen. Der Wickelmantel 104c wird durch eine Kunststofffolie gebildet.

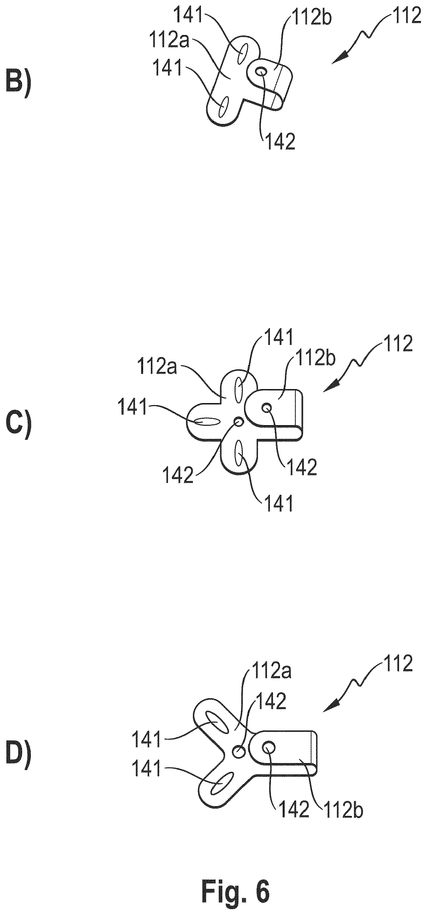

**Fig. 6** zeigt weitere Ausführungsformen des Kontaktmetallblechs 112, das sich zur Kontaktierung des ersten Längsrands 106a des aus der ersten endständigen Stirnseite 104a austretenden Stromkollektors 106 eines erfindungsgemäßen Energiespeicherelements 100 eignet.

Von den in den Ausführungsformen B-D der Fig. 4 dargestellten Kontaktmetallblechen unterscheiden sich die hier dargestellten Ausführungsformen B-D im Wesentlichen nur darin, dass der Abschnitt 112b nicht in einer Z-Form gefaltet sondern U-förmig umgebogen ist. Solche Kontaktmetallbleche können in den Energiespeicherelementen gemäß den Figuren 1 bis 3 das Kontaktmetallblech 112 und den elektrischen Leiter 133 ersetzen.

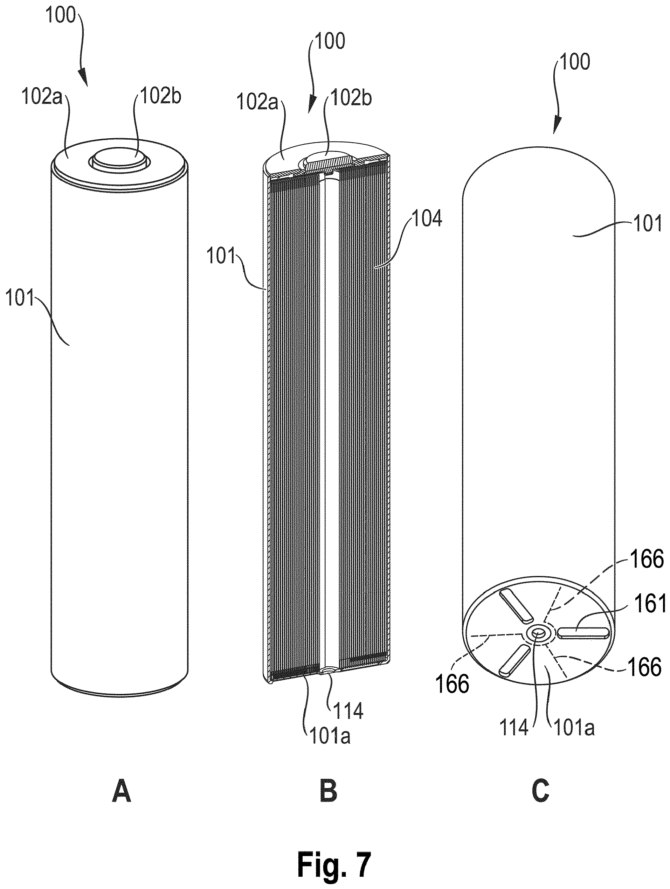

**Fig. 7A-C** zeigt eine bevorzugte Ausführungsform einer erfindungsgemäße Energiespeicherzelle in einer Ansicht schräg von oben (Fig. 7A), in einem Längsschnitt (Fig. 7B) und in einer Ansicht schräg von unten (Fig. 7C). Die Energiespeicherzelle 100 hat die Form einer zylindrischen Rundzelle. Das Gehäuse der Energiespeicherzelle 100 wird von einem becherförmig ausgebildeten Gehäuseteil 101 und einem Deckel gebildet. Das Deckel umfasst dabei eine Deckelplatte 102a, die die Form einer Lochplatte hat, sowie einen Anschlusspol 102b im Zentrum des Deckelbauteils.

Wie in der Schnittdarstellung in Fig. 2B zu erkennen ist, befindet sich im Inneren der Energiespeicherzelle 100 der wickelförmige Verbundkörper 104, der aus den gewickelten Elektrodenbändern mit dazwischenliegenden Separatorenbändern gebildet ist.

In Fig. 2C ist die Unterseite der Energiespeicherzelle 100 gezeigt, die von dem Gehäuseboden 101a gebildet ist. In dem Gehäuseboden 101a sind drei sternförmig angeordnete Schweißprägungen in Form von Sicken 161 angeordnet, die nach außen als Vertiefung und nach innen als längliche Erhöhung zutage treten. Auf diesen Sicken 161 sitzt innen der Längsrand des jeweiligen Stromkollektors auf und im Bereich dieser Sicken ist der Stromkollektor mit dem Gehäuseboden vorzugsweise unmittelbar verschweißt.

Als Material für den Gehäuseboden 101a und das gesamte becherförmige Gehäuseteil 101 dient in bevorzugter Weise Aluminium.

Im vorliegenden Beispiel sind in den Gehäuseboden 101a zwei Sicherungsfunktionen integriert. Zum einen befindet sich im Zentrum des Gehäusebodens 101a eine Durchbrechung, die mit einer metallischen Membran 114 verschlossen ist. Im Fall eines auftretenden Überdrucks durch eine Fehlfunktion der Zelle wird mittels dieser Membran 114 ein Druckausgleich herbeigeführt, indem die Membran in diesem Fall durch den Druck entweder aufgesprengt oder abgesprengt wird. Auf diese Weise kann ein im Inneren der Zelle sich gegebenenfalls gebildetes Gas durch die Durchbrechung im Gehäuseboden 101a entweichen (Primärsicherung).

Darüber hinaus ist im Gehäuseboden 101a eine weitere Sicherungsfunktion vorgesehen, die durch drei sternförmig angeordnete Nuten 166 realisiert ist. Diese Nuten 166 stellen Schwächungen der Struktur des Gehäusebodens 101a dar und bilden damit Sollbruchstellen im Fall eines auftretenden Überdrucks im Inneren der Zelle (Sekundärsicherung). In diesem Ausführungsbeispiel befinden sich die Nuten 166 auf der inneren Seite des Gehäusebodens 101a und sind daher in Fig. 7C als gestrichelte Linien dargestellt. Die Nuten 166 können beispielsweise als drei Ritzlinien realisiert sein. Die sternförmige Anordnung der Ritzlinien ist darüber hinaus durch eine teilkreisförmige Verbindung der Ritzlinien bzw. der Nuten 166 weiter ausgebildet. Bei einem entsprechend hohen Überdruck reißt der Gehäuseboden 101a entlang der Nuten 166 und der teilkreisförmigen Verbindung dieser Nuten auf, so dass eine Austrittsöffnung mit vergleichsweise großem Querschnitt entsteht, über den gegebenenfalls im Gehäuseinneren gebildetes Gas schnell entweichen kann.

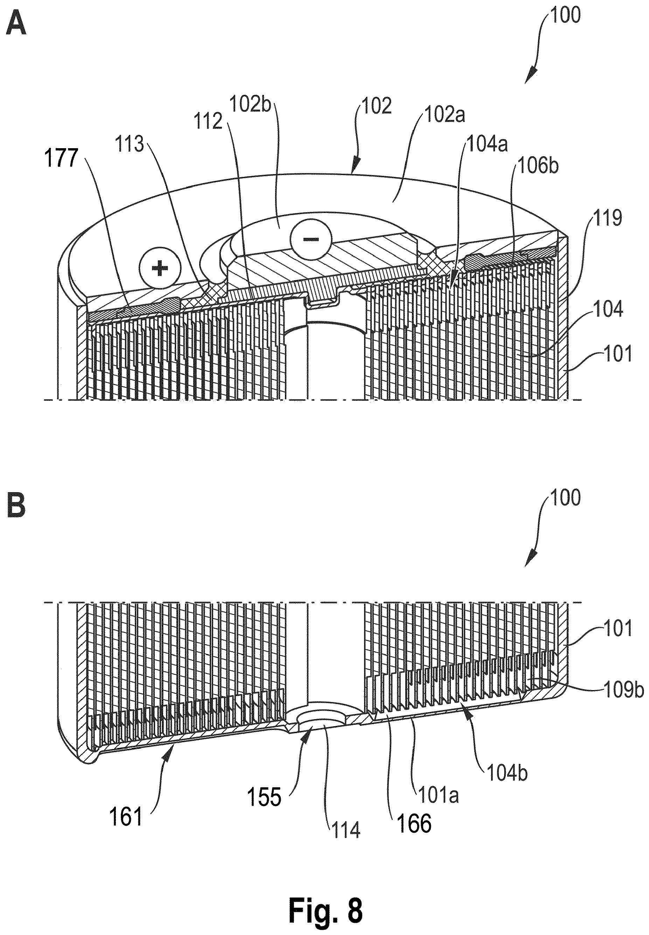

**Fig. 8A****,B** zeigt eine vergrößerte Darstellung der stirnseitigen Bereiche der Ausführungsform der Energiespeicherzelle 100 gemäß Fig. 7. Aus Fig. 8A gehen Details der Stirnseite mit dem Deckel 102 hervor. Der Deckel 102 umfasst die Deckelplatte 102a mit einer zentralen Durchbrechung und mit dem im Zentrum der Deckelplatte 102a angeordneten Anschlusspol 102b. In diesem Ausführungsbeispiel kann beispielsweise der Anschlusspol 102b den negativen Pol und die umgebende Deckelplatte 102a den positiven Pol der Energiespeicherzelle 100 bilden.

Unterhalb des Anschlusspols 102b befindet sich das Kontaktmetallblech 112, das auf dem freien Randstreifen 106b des spiralförmig angeordneten Anodenstromkollektors der negativen Elektrode aufsitzt und hieran angeschweißt ist. Das Kontaktmetallblech 112 ist mitdem aus zwei metallischen Komponenten gebildeten Anschlusspol 102b elektrisch verbunden, insbesondere auch durch Verschweißung. Gegenüber dem Kontaktmetallblech 112 ist die Deckelplatte 102a durch eine O-Ringförmige Isolierscheibe 177 elektrisch isoliert. Weiterhin befindet sich in einem Spalt zwischen dem Anschlusspol 102b und der Deckelplatte 102a eine elektrische isolierende Vergussmasse 113.

Fig. 8B zeigt Details der gegenüberliegenden Stirnseite der Energiespeicherzelle 100. Derfreie Randstreifen 109b des Kathodenstromkollektors ist auf dieser Stirnseite der Energiespeicherzelle 100 unmittelbar mit dem Gehäuseboden 101a elektrisch verbunden, insbesondere verschweißt. Über den Mantel des becherförmigen Gehäuseteils 101 besteht der elektrische Kontakt zur metallischen Deckelplatte 102a auf der gegenüberliegenden Stirnseite, so dass das positive Potential der Zelle ebenfalls auf der oberen Stirnseite der Energiespeicherzelle 100 abgreifbar ist.

An der in Fig. 8B dargestellten unteren Stirnseite der Energiespeicherzelle 100 sind die erfindungsgemäß bevorzugten Sicherungsfunktionen der Zelle gegen Überdruckzu erkennen. Die Primärsicherung wird von der metallischen Membran 114 gebildet, die eine zentrale kreisförmige Durchbrechung 155 im Gehäuseboden 101a verschließt. Die Sekundärsicherung wird von den Nuten 166 gebildet, wobei in dieser Darstellung eine der drei sternförmige angeordneten Nuten 166 im Schnitt erkennbar ist. Die Nuten 166, die sich auf der Innenseite des Gehäusebodens 101a befinden, stellen eine definierte Schwächungsstruktur des Gehäusebodens dar, so dass bei einem relativ hohen, im Inneren der Zelle entstehenden Überdruck diese Strukturen sich öffnen und Gas entweichen kann.

Das anhand der Fig. 8 illustrierte bevorzugte Design einer erfindungsgemäßen Energiespeicherzelle 100 erlaubt eine reduzierte Anzahl von Teilen im oberen Bereich der Energiespeicherzelle (Fig. 8A), wobei in diesem oberen Bereich der negative und der positive Anschluss der Zelle angeordnet sind. Insbesondere kann durch dieses Design auf zusätzliche Ableiter durch die einteilige Ausfertigung des Anschlusspols 102b verzichtet werden.

Auch die direkte Kontaktierung des Längsrands eines der Elektrodenbänder auf der Seite des Gehäusebodens (Teilfigur 8B) dient der besonders kompakten Bauweise der Zelle, so dass keine Totvolumina für die verschiedenen Funktionen der Zelle erforderlich sind.

Durch die direkte Kontaktierung der Längsränder der Elektrodenbänder werden darüber hinaus eine verbesserte Wärmeabfuhr und eine Reduzierung des Innenwiderstands erreicht.

Zudem erlaubt das Design dieser Zelle im Allgemeinen auch eine Ausbildung von längeren Wickeln und damit eine größere Energiedichte der resultierenden Energiespeicherzelle.

Die obere Stirnseite der Energiespeicherzelle 100 ist in dieser Ausgestaltung maximal kompakt ausgebildet. Bei im Inneren der Zelle gegebenenfalls entstehenden Gasen, die zu einem Druckanstieg führen, werden diese Gase zwangsläufig in den unteren Bereich der Zelle geleitet, in welchem die Sicherungsfunktionen für einen Druckausgleich angeordnet sind. Insgesamt weist eine solche Zelle daher ein sehr gutes Sicherheitsniveau auf.

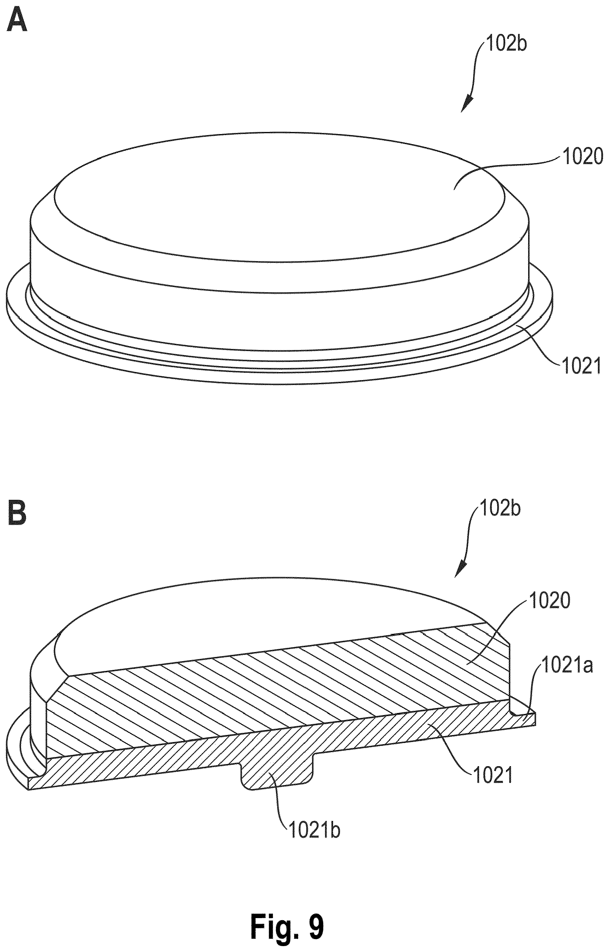

**Fig. 9A****,B** zeigt eine Detaildarstellung des Anschlusspols 102b aus den Figuren 7 und 8 in einer Ansicht schräg von oben (Fig. 9A) und in einer Schnittdarstellung (Fig. 9B). Der Anschlusspol 102b kann aus zwei metallischen Komponenten zusammengesetzt sein. Der obere Bereich (Poloberteil) 1020 muss nicht zwingend aus dem gleichen Metall gefertigt sein wie der untere Bereich (Polunterteil) 1021. Der obere Bereich 1020 weist eine abgeschrägte, umlaufende obere Kante auf. Wie in der Schnittdarstellung gemäß Fig. 4B zu erkennen ist, ist bei dem unteren Bereich 1021 eine außen umlaufende Schweißschulter 1021a und ein zentraler, nach unten abragender Stift 1021b vorgesehen. Der Stift 1021b greift zweckmäßigerweise in eine entsprechend vorgesehene Vertiefung im Zentrum des Kontaktmetallblechs 112 ein und sorgt damit für eine gute Passung des Anschlusspols 102b.

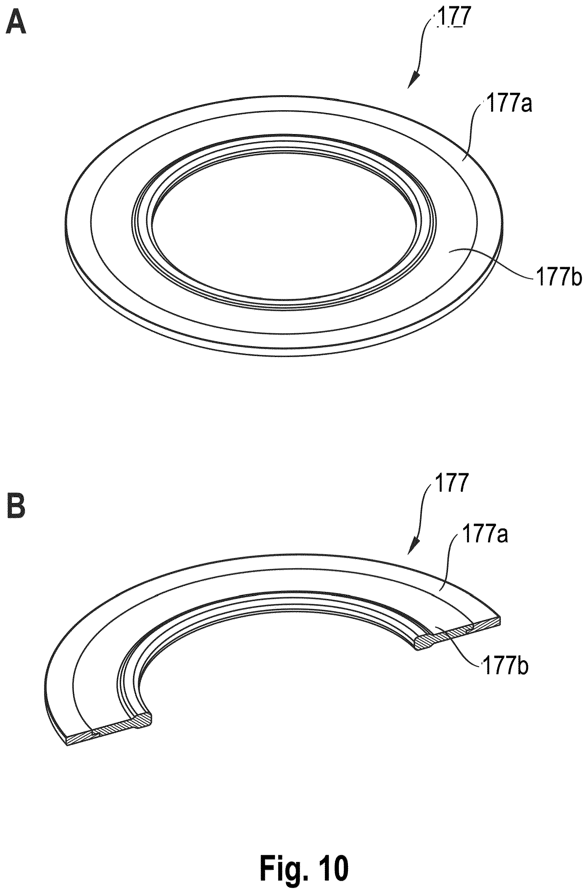

**Fig. 10A****,B** zeigt die O-Ring-förmigen Isolierscheibe 177 in einer kompletten Ansicht schräg von oben (Fig. 10A) und in einer geschnittenen Ansicht (Fig. 10B). Die Isolierscheibe 177 hat zum einen die Funktion einer elektrischen Isolierung der vorzugsweise positiv gepolten Deckelplatte 102a gegenüber den Komponenten der Energiespeicherzelle 100 mit umgekehrter Polarität. Darüber hinaus wird durch die Isolierscheibe 177 auch ein flüssigkeitsdichter und luftdichter Verschluss des Gehäuses erreicht.

In dem hier gezeigten bevorzugten Ausführungsbeispiel der Isolierscheibe 177 ist die Isolierscheibe aus zwei unterschiedlichen Materialien gefertigt. Der äußere Bereich 177a der Isolierscheibe 177 ist vorzugsweise aus einem besonders festen Kunststoffmaterial, beispielsweise aus PBT (Polybutylenterephthalat) gebildet. Der innere Bereich 177b ist vorzugsweise aus einem etwas flexibleren und vor allem aus einem besonders wärmebeständigen Kunststoff gebildet, beispielsweise aus PET (Polyethylenterephthalat). Der äußere Bereich 177a sorgt damit für eine besondere mechanische Stabilität. Der Innere Bereich 177b sorgt für Flexibilität und ist dabei besonders beständig gegenüber der heiß einzubringenden Vergussmasse 13 bei der Montage der Energiespeicherzelle.

Mit besonderem Vorteil weist der Innenumfang der O-Ring-förmigen Isolierscheibe 177 eine umlaufende Verdickung auf, wodurch die Stabilität der Komponenten in dem stirnseitigen Bereich der montierten Energiespeicherzelle weiter unterstützt wird.

Bei der Montage der Energiespeicherzelle wird durch das Einsetzen der Isolierscheibe 177 im Deckelbereich der Zelle zunächst ein temporäres Abdichten der Zelle erreicht, bis die anschließend eingebrachte Vergussmasse 113 zum vollständigen Verschluss der Zelle ausgehärtet ist. Weiterhin erlaubt die Isolierscheibe 177 durch ihre spezielle Form ein axiales Stützen des wickelförmigen Verbundkörpers 104, beispielsweise bei einem Testen der Zelle. Falls die Zelle seitlich deformiert wird, bietet die Form der Isolierscheibe 177 darüber hinaus Raum für eine gegebenenfalls eintretende Verformung des Kontaktmetallblechs 112. Schließlich ist es durch die Form der Isolierscheibe 177 möglich, das Volumen der Vergussmasse 113 und die Menge an gegebenenfalls eingeschlossenen Luftblasen während des Vergusses bei der Montage der Energiespeicherzelle zu reduzieren.

Als mögliche Alternative zu einer solchen Isolierscheibe kann beispielsweise ein isolierender Dichtwulst, vergleichbar mit einer Silikonraupe, aufdosiert werden. Auch hierdurch kann ein dichter Abschluss gewährleistet werden. Die Isolierscheibe 177, insbesondere in der hier illustrierten Ausführungsform, bietet demgegenüber jedoch die verschiedenen genannten Vorteile.

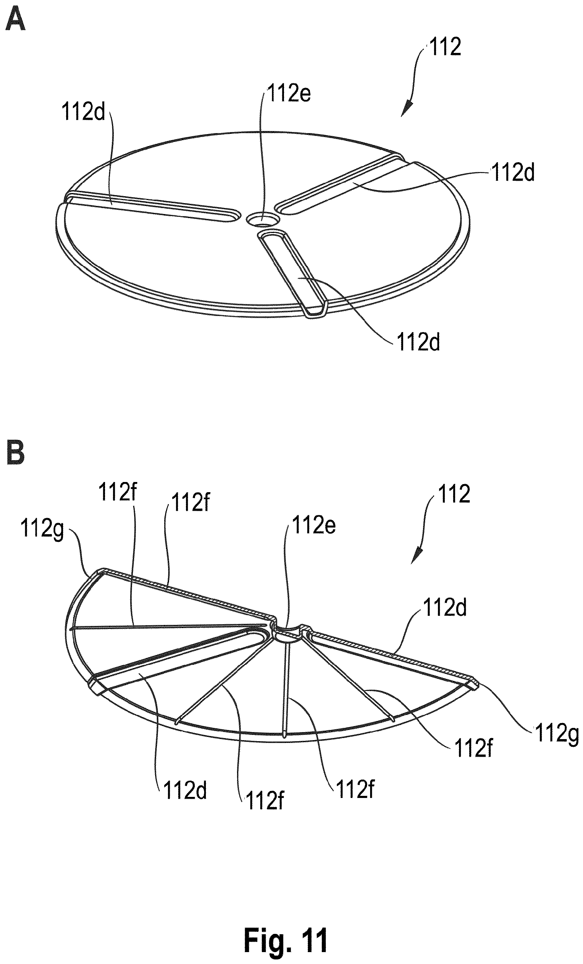

**Fig. 11A****,B** zeigt eine bevorzugte Ausführungsform des Kontaktmetallblechs 112, das für die Kontaktierung des freien Rands des Stromkollektors der jeweiligen Elektrode im oberen Bereich der Energiespeicherzelle vorgesehen ist. Fig. 11A zeigt eine Aufsicht auf das scheibenförmige Kontaktmetallblech 112. Fig. 11B zeigt einen Schnitt durch das Kontaktmetallblech 112 in einer Ansicht von unten, also auf diejenige Seite des Kontaktmetallblechs, die dem Verbundkörper 104 im Inneren der Energiespeicherzelle zugewandt ist.

Vergleichbar mit den Sicken 161 des Gehäusebodens 101a weist auch das Kontaktmetallblech 112 drei sternförmig angeordnete Sicken 112d auf, die nach außen (Fig. 11A) als Vertiefung und nach innen (Fig. 11B) als längliche Erhöhung erscheinen. Die Sicken 112d können beispielsweise eingeprägt werden und weisen beispielsweise eine Tiefe von 0,25 mm auf. Die Sicken 112d stehen im montierten Zustand der Zelle in Kontakt mit dem jeweiligen Längsrand eines Elektrodenbands des hierüber zu kontaktierenden Verbundkörpers. Das Kontaktmetallblech 112 ist vorzugsweise über die Sicken 112d mit dem jeweiligen Längsrand des Elektrodenbands verschweißt.

In Zentrum des Kontaktmetallblechs 112 befindet sich eine Vertiefung 112e. Die Vertiefung 112e dient zur Aufnahme des Anschlusspols 102b, indem der zentrale Stift 1021b des Anschlusspols 102b in die Vertiefung 112e eingreift. Auf diese Weise kann der Anschlusspol 102b in einfacher Weise auf dem Kontaktmetallblech 112 positioniert und fixiert werden, so dass ein Anschweißen des Anschlusspols 102b ohne Probleme möglich ist.

Weiterhin sind in der hier gezeigten besonders bevorzugten Ausführungsform des Kontaktmetallblechs 112 weitere sternförmige schmale Vertiefungen 112f vorgesehen, die sich auf der nach innen gerichteten Seite des Kontaktmetallblechs 112 befinden. In diesem Ausführungsbeispiel sind insgesamt neun dieser Vertiefungen 112f als sternförmig angeordnete schmale Rinnen vorgesehen. Die Rinnen können beispielsweise eine Tiefe von 0,1 mm aufweisen. Die Vertiefungen 112f dienen einer besseren Verteilung des Elektrolyten innerhalb der Zelle.

Weiterhin weist das Kontaktmetallblech 112 in dieser bevorzugten Ausführungsform eine geprägte umlaufende Kante 112g auf, die als Soll-Knickstelle insbesondere mit dem Grat nach unten angeordnet ist. Diese Soll-Knickstelle erleichtert die Montage des Gehäuses der Energiespeicherzelle.

In bevorzugten Ausgestaltungen ist das Kontaktmetallblech 112 aus Aluminium gefertigt, beispielsweise aus einem Aluminiumblech mit einer Materialstärke von 0,3 mm.

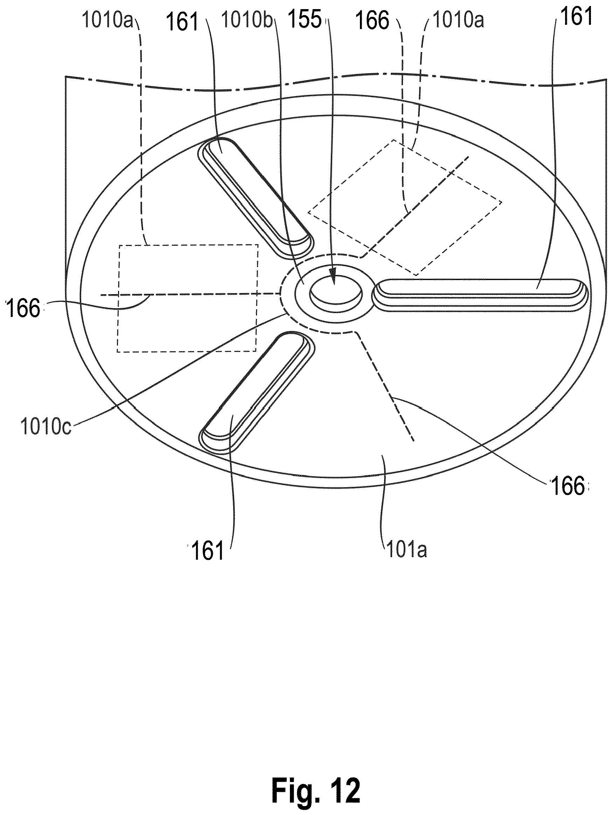

**Fig. 12** zeigt eine Detailansicht des Gehäusebodens 101a der Energiespeicherzelle mit den sternförmig angeordneten, nach innen vorstehenden Sicken 161, die insbesondere als Schweißprägungen für die Kontaktierung des wickelförmigen Verbundkörpers ausgebildet sind. Die sternförmige Anordnung mit drei Sicken 161 ist insbesondere durch ihre Drehsymmetrie für die Montage der Zelle besonders vorteilhaft.

Die zentrale Durchbrechung 155 im Gehäuseboden 101a ist von einer metallischen Membran 114 abgedeckt und dient als Primärsicherung für die Zelle bei einem auftretenden Überdruck. Dabei ist es insbesondere vorgesehen, dass die Durchbrechung 155 bei der Fertigung der Zelle zunächst für die Befüllung der Zelle mit Elektrolyt genutzt wird, bevor die Durchbrechung 155 mit der metallischen Membran 114 verschlossen wird.

Für eine passgenaue Aufnahme der metallischen Membran 114 zum Verschluss der zentralen Durchbrechung 155 ist vorzugsweise eine umlaufende Vertiefung 1010b vorgesehen, die die zentrale Durchbrechung 155 umgibt.

Weiterhin sind in dieser Ausführungsform drei sternförmig angeordnete Schwächungsstrukturen in Form der nach innen offenen Nuten 166 vorgesehen, die durch eine teilkreisförmige Verbindungslinie 1010c miteinander verbunden sind. Diese Schwächungsstrukturen 166 und 1010c dienen als Sekundärsicherung gegen einen internen Überdruck. Alternativ zu der Anbringung der Schwächungsstrukturen von innen am Gehäuseboden können solche Schwächungsstrukturen, beispielsweise Ritzlinien, auch von außen angebracht sein.

Außen auf dem Gehäuseboden 101a können weiterhin ein oder mehrere Beschriftungsfelder 1010a vorgesehen sein, die für die Anbringung von verschiedenen schriftlichen Informationen genutzt werden können.

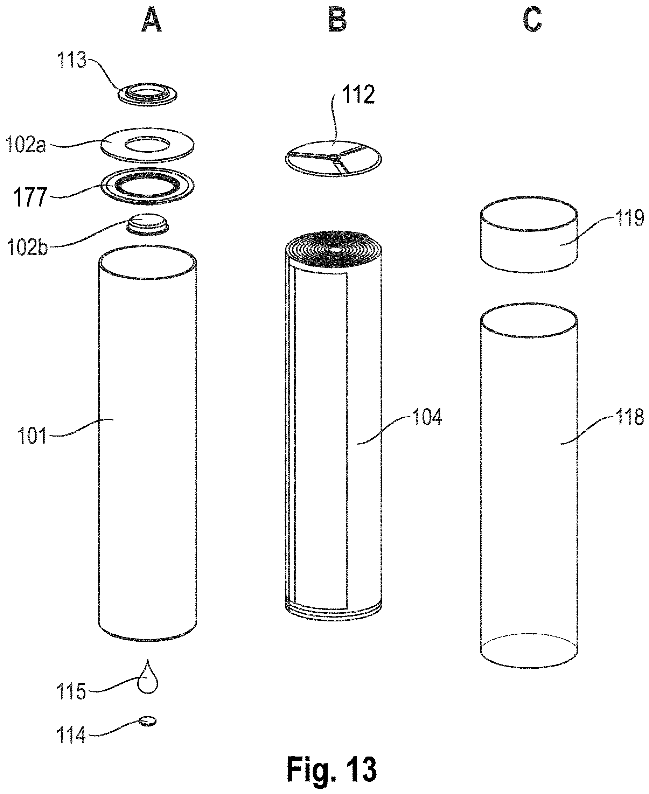

**Fig. 13A-C** zeigt in Explosionsdarstellungen die verschiedenen Komponenten einer bevorzugten Ausführungsform einer erfindungsgemäßen Energiespeicherzelle. Aus Fig. 13A gehen die Komponenten des Gehäuses mit dem Gehäusebecher 101, dem Anschlusspol 102b, der O-Ring-förmigen Isolierscheibe 177, der Deckelplatte 102 mit der zentralen Aussparung, in die der Anschlusspol 102b eingreift, sowie der Vergussmasse 113 hervor. Unterhalb des Gehäusebechers 101 ist der Verschluss für die Energiespeicherzelle in Form der metallischen Membran 114 gezeigt, wobei dieser Verschluss nach der Befüllung der montierten Zelle mit dem hier schematisch angedeuteten Elektrolyt 115 angebracht wird.

Fig. 13B zeigt den wickelförmigen Elektroden-Separator-Verbundkörper 104 und das daran anzubringende Kontaktmetallblech 112. Der Verbundkörper 104 kann in an sich bekannter Weise durch Wicklung der Elektrodenbänder und der Separatoren insbesondere auf einer Wickelmaschine hergestellt werden. Zum Abschluss der Wickelform kann in bevorzugter Weise beispielsweise mit einem konischen Druckstück die äußerste Wickelwindung um beispielsweise 30° bis 45° nach innen gebogen werden, so dass die Wickelform stabilisiert wird. Auf die äußere Umfangsfläche des Wickels wird anschließend vorzugsweise ein Klebeband 118 (Fig. 13C), beispielsweise aus Polypropylen, angebracht, das neben der stabilisierenden Funktion gegebenenfalls auch eine elektrisch isolierende Funktion in der Zelle übernimmt. Nach dieser Stabilisierung des wickelförmigen Verbundkörpers 104 kann das scheibenförmige Kontaktmetallblech 112, das beispielsweise aus Aluminium gebildet ist, lose auf die obere Stirnseite des Wickels gelegt werden und mit einem besonders stabilen Klebeband 119 aus beispielsweise Polyimid fixiert werden. Hierfür kann beispielsweise ein Band aus Kapton^{®} mit einer Dicke von 50 µm verwendet werden.

Anschließend kann der Verbundkörper 104 mit dem angebrachten Kontaktmetallblech 112 in das becherförmige Gehäuseteil 101 eingesetzt. Nach einer gegebenenfalls kameragestützten Ausrichtung der Sicken im Gehäuseboden und in dem Kontaktmetallblech kann mit Hilfe geeigneter Presswerkzeuge die Anordnung verpresst werden und von oben und unten zur Kontaktierung der Längsränder der Elektrodenbänder mit den jeweiligen Sicken simultan oder sequenziell laserverschweißt werden. Anschließend kann der Anschlusspol 102b auf das Kontaktmetallblech 112 aufgesetzt und aufgeschweißt werden.

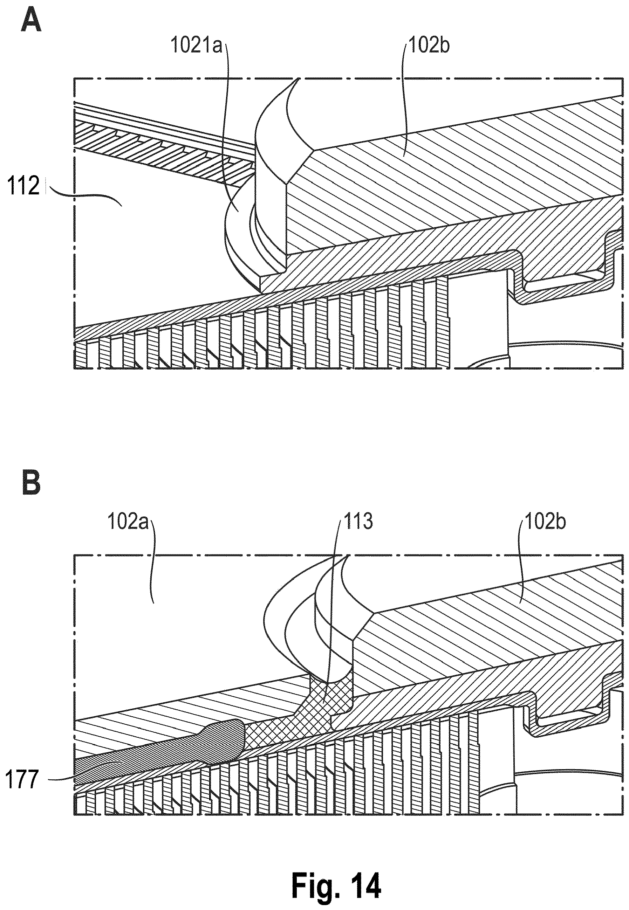

**Fig. 14A****,B** zeigt Details der Fertigung der Deckelbaugruppe der Zelle. Aus Fig. 14A geht eine Detailansicht des Aufschweißens des Anschlusspols 102b auf dem Kontaktmetallblech 112 hervor, wobei der Laser schräg oder vertikal insbesondere im Bereich der umlaufenden Schweißschulter 1021a des Anschlusspols 102b angreifen kann. In Fig. 14B ist dargestellt, wie danach die Isolierscheibe 177 eingelegt und auf die richtige Höhe gedrückt werden kann, bevor die Deckelplatte 102a aufgelegt und von schräg, vertikal oder horizontal mit dem hier nicht dargestellten becherförmigen Gehäuseteil verschweißt wird. Nun kann der Anschlusspol 102b gegebenenfalls auf die richtige Höhe in Bezug zu der Zellschulter, die von der oberen Seite der Deckelplatte 102a gebildet wird, gedrückt werden. Der hierfür vorgesehene Abstand kann beispielsweise 1 mm zwischen der Oberseite des Anschlusspols 102b und der Oberseite der Deckelplatte 102a betragen. Der Spalt zwischen der Deckelplatte 102a und dem Anschlusspol 102b wird mit einer Vergussmasse 113 ausgegossen, um so diesen Teil der Energiespeicherzelle luftdicht und flüssigkeitsdicht zu verschließen.

Anschließend kann die Energiespeicherzelle in einen Ofen überführt werden, um die Vergussmasse 113 abzubinden und die Restfeuchte des wickelförmigen Verbundkörpers auszuheizen.

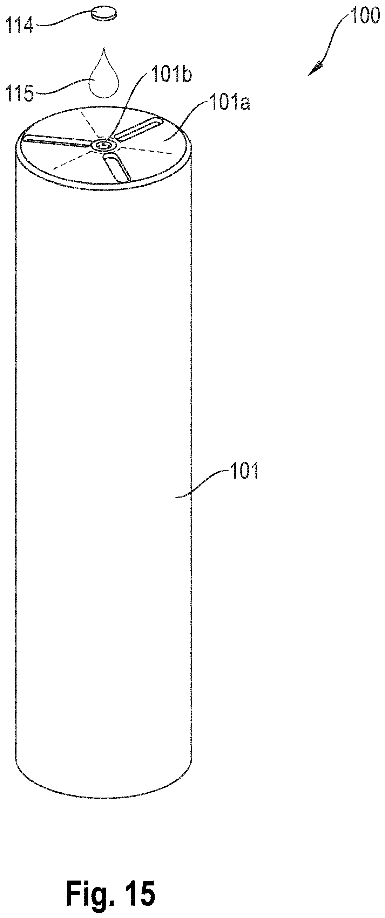

**Fig. 15** illustriert das abschließende Befüllen mit Elektrolyt 115, der von der Unterseite der Energiespeicherzelle 100 (in dieser Darstellung oben) durch die Durchbrechung 101b im Gehäuseboden 101a eingefüllt wird. Abschließend wird die metallische Membran 114 als Verschluss auf der Öffnung im Gehäuseboden 101a bzw. als Verschluss auf die zentrale Durchbrechung 155 aufgebracht. Hierfür kann beispielsweise mit einem vertikalen Laserstrahl gearbeitet werden.

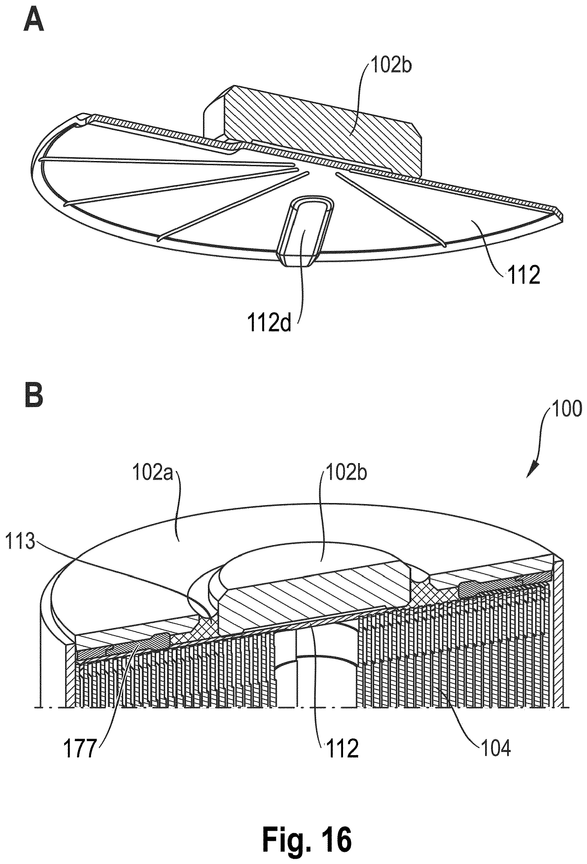

**Fig. 16** illustriert eine alternative Möglichkeit zur Montage der Deckelbaugruppe. Fig. 16A zeigt das Kontaktmetallblech 112 mit daran angebrachtem Anschlusspol 102b in einer geschnittenen Ansicht schräg von unten. Fig. 16B zeigt die oberen Stirnseitenbereich der Zelle in einem Längsschnitt.

Bei diesem alternativen Fertigungsverfahren wird der Anschlusspol 102b vorab auf das Kontaktmetallblech 112 geschweißt. Hierfür kann eine Reibschweißung oder eine Rührreibschweißung eingesetzt werden.

Bei der Ausgestaltung des Kontaktmetallblechs 112 in dieser Ausführungsform können die sternförmig angeordneten Sicken 112d des Kontaktmetallblechs 112 gegebenenfalls verkürzt werden, da sie bei der nachfolgenden Anschweißung des Elektroden-Separator-Verbundkörpers von dem Anschlusspol 102b abgedeckt werden. Insgesamt steht daher etwas weniger Schweißfläche für die Kontaktierungdes Längsrands des jeweiligen Elektrodenbands mitdem Kontaktmetallblech 112 zur Verfügung. Allerdings kann diese Ausgestaltung für die Montage Vorteile bieten.

Da die Anbringung des Anschlusspols 102b direkt auf dem Kontaktmetallblech 112 außerhalb der Gehäusebecherbaugruppe unter Umständen einfacher durchführbar ist, kann gegebenenfalls auf eine zentrale Vertiefung in dem Kontaktmetallblech und auf einen korrespondierenden Stift bei dem Anschlusspol 102b verzichtet werden.

Die weitere Montage der Energiespeicherzelle mit dem Anschlusspol 102b, der bereits direkt auf das Kontaktmetallblech 112 aufgeschweißt ist, unterscheidet sich im Prinzip nicht von dem vorab beschriebenen Herstellungsverfahren für die Energiespeicherzelle 100.

Fig. 17 zeigt ein Beispiel einer Deckelbaugruppe 202, die als Deckel bei einem erfindungsgemäßen Energiespeicherelement gemäß Fig. 1 oder Fig. 2 oder Fig. 3 verbaut werden kann.

Diese umfasst die Metallscheibe 213 mit der metallischen Membran 214, die sich bei einem Überdruck innerhalb des Gehäuses nach außen wölbt oder birst. Die Metallscheibe 213 mit der Membran 214 steht in elektrischem und in unmittelbarem Kontakt mit der metallischen Polkappe 217, die die Deckelbaugruppe 202 nach außen abschließt. Weiterhin steht sie in elektrischem Kontakt mit einer inneren metallischen Kontaktscheibe 215, allerdings ausschließlich über die metallische Membran 214. Ansonsten sind die Metallscheibe 213 und die Kontaktscheibe 215 durch den ringförmigen Isolator 216 elektrisch voneinander isoliert. Wölbt sich die Membran 214 in Folge eines Überdrucks, der über die Durchbrechung 215a unmittelbar auf die Membran wirken kann, nach außen, bricht der elektrische Kontakt zwischen der Metallscheibe 213 und der Kontaktscheibe 215 ab. Bei hohen Drücken kann die Membran auch bersten. Die Ableiter 113 der in den Figuren 1 bis 3 dargestellten Zellen können an die Kontaktscheibe 213 geschweißt werden.

## Patentansprüche

1. Sekundäres Energiespeicherelement (100) mit den folgenden Merkmalen:
a. Es umfasst als Elektroden eine Kathode (108) und eine Anode (105), die Teile eines Verbundkörpers (104) sind, in dem sie, getrennt durch eine Separator- oder Festelektrolytschicht (116), in der Sequenz Kathode (108) / Separator- oder Festelektrolytschicht (116) / Anode (105) vorliegen,
b. die Kathode (108) umfasst einen Kathodenstromkollektor (109) und ein positives Elektrodenmaterial (110),
c. die Anode (105) umfasst einen Anodenstromkollektor (106) und ein negatives Elektrodenmaterial (107),
d. der Kathodenstromkollektor (109) weist
- einen Hauptbereich, der beidseitig mit einer Schicht aus dem positiven Elektrodenmaterial (110) beladen ist, sowie
- einen freien Randstreifen (109b), der sich entlang eines Rands (109a) des Kathodenstromkollektors (109) erstreckt und der nicht mit dem positiven Elektrodenmaterial (110) beladen ist, auf,
und/oder
der Anodenstromkollektor (106) weist
- einen Hauptbereich, der beidseitig mit einer Schicht aus dem negativen Elektrodenmaterial (107) beladen ist, sowie
- einen freien Randstreifen (106b), der sich entlang eines Rands (106a) des Anodenstromkollektors (106) erstreckt und der nicht mit dem negativen Elektrodenmaterial (107) beladen ist, auf,
e. die Kathode (108) und die Anode (105) sind derart ausgebildet und/oder innerhalb des Verbundkörpers (104) derart zueinander angeordnet, dass der freie Randstreifen (109b) des Kathodenstromkollektors (109) aus einer Seite (104b) des Verbundkörpers (104) und/oder derfreie Randstreifen (106b) des Anodenstromkollektors (106) aus einer anderen Seite (104a) des Verbundkörpers (104) austritt, und
f. das Energiespeicherelement umfasst ein erstes Kontaktmetallblech (112), das mit einem derfreien Randstreifen (106b) in unmittelbarem Kontakt steht, und/oder ein zweites Kontaktmetallblech (101a), das mit dem anderen der freien Randstreifen (109b) in unmittelbarem Kontakt steht,
wobei
g. die Elektroden (105, 108) mindestens einen lonentyp aus der Gruppe mit Natriumionen, Kaliumionen, Calciumionen, Magnesiumionen und Aluminiumionen umfassen, welche beim Laden und Entladen des sekundären Energiespeicherelements (100) zwischen der Kathode (108) und der Anode (105) ausgetauscht werden.

2. Energiespeicherelement nach Anspruch 1 mit den folgenden zusätzlichen Merkmalen:
a. Die Elektroden (105, 108) und die Stromkollektoren (106, 109) sowie die Schichten aus den Elektrodenmaterialien (107, 110) sind bandförmig ausgebildet,
b. Es umfasst mindestens einen bandförmigen Separator (116) oder mindestens eine bandförmige Festelektrolytschicht,
c. der Verbundkörper (104) liegt in Form eines Wickels vor, in dem die Elektroden (105, 108) und der mindestens eine Separator (116) um eine Wickelachse herum aufgewickelt vorliegen, wobei der Verbundkörper (104) eine erste und eine zweite endständige Stirnseite (104a, 104b) und einen Wickelmantel (104c) umfasst und der freie Randstreifen (109b) des Kathodenstromkollektors (109) aus der ersten Stirnseite (104b) und/oder der freie Randstreifen (106b) des Anodenstromkollektors (106) aus der zweiten Stirnseite (104a) austritt,
d. Es umfasst ein Gehäuse, insbesondere ein Metallgehäuse, umfassend einen Gehäusemantel oder Seitenwände und an den Stirnseiten einen Boden (101a) und einen Deckel (102), und
e. In dem Gehäuse ist der als Wickel ausgebildete Verbundkörper (104) derart ausgerichtet, so dass der Wickelmantel (104c) an der Innenseite (101d) des Gehäusemantels oder den Seitenwänden anliegt.

3. Energiespeicherelement nach Anspruch 1 mit den folgenden zusätzlichen Merkmalen:
a. Der Verbundkörper (104) liegt in Form eines prismatischen Stapels vor, in dem die Kathode (108) und die Anode (105) gemeinsam mit weiteren Kathoden (108) und Anoden (105) gestapelt vorliegen.
b. Die Elektroden (105, 108) und die Stromkollektoren (106,109) sowie die Schichten aus den Elektrodenmaterialien sind polygonal, insbesondere rechteckig, ausgebildet.
c. Es umfasst mindestens einen bandförmigen oder polygonalen, insbesondere rechteckigen, Separator (116) oder mindestens einen bandförmigen oder polygonalen, insbesondere rechteckigen, Festelektrolyten,
d. Der Stapel ist von einem prismatischen Gehäuse umschlossen.

4. Energiespeicherelement nach einem der vorhergehenden Ansprüche mit mindestens einem der folgenden zusätzlichen Merkmale:
a. Das Energiespeicherelement (100) ist eine Natrium-Ionen-Zelle.
b. Das Energiespeicherelement umfasst eine Natrium-Ionen-Zelle.
c. Das Energiespeicherelement umfasst einen der folgenden Elektrolyten:
- NaClO₄ gelöst in mindestens einem organischen Lösungsmittel, insbesondere in PC oder in einer Carbonatmischung aus der Gruppe mit EC/DEC/FEC und PC/FEC;
- NaPF₆ und/oder NaTFSI gelöst in mindestens einem organischen Lösungsmittel, insbesondere in PC oder in einer Carbonatmischung aus der Gruppe mit EC/DEC/FEC, EC/PC, EC/DEC, FEC/EMC und PC/FEC oder in einer Ethermischung wie THF/mTHF;
- NaFSI und/oder NaTFSI und/oder NaTDI gelöst in mindestens einem organischen Lösungsmittel, insbesondere in 1,4-Dioxan (DX) und/oder 1,3-Dioxolan (DOL) und/oder Dimethylether (DME);
- NaFSI und/oder NaTFSI und/oder NaTDI gelöst in mindestens einem organischen Lösungsmittel, insbesondere in Dimethylcarbonat (DX) und/oder Tris(2,2,2-trifluoroethyl)phosphat (TFP);
- NaN(SO₂F)₂ gelöst in mindestens einem organischen Lösungsmittel, insbesondere in 1,4-Dioxan (DX) und/oder 1,3-Dioxolan (DOL) und/oder Dimethylether (DME);
- NaBF4 gelöst in mindestens einem organischen Lösungsmittel, insbesondere in Tetraethylenglykoldimethylether (TEGDME) und/oder in ACN und/oder in PC und/oder GBL.

5. Energiespeicherelement nach einem der vorhergehenden Ansprüche mit mindestens einem der folgenden zusätzlichen Merkmale:
a. Die Seite des Verbundkörpers (104a, 104b), aus der der freie Randstreifen (109b) des Kathodenstromkollektors (109) oderderfreie Randstreifen (106b) desAnodenstromkollektors (106) austritt, wird von einem Rand des Separators (116), bei einem Energiespeicherelement mit gewickeltem Verbundkörper (104) insbesondere einem Längsrand des Separators (116), gebildet.
b. Der Rand oder Längsrand des Separators (116), der die Seite, insbesondere die Stirnseite, bildet, ist keramisch verstärkt.

6. Energiespeicherelement nach einem der vorhergehenden Ansprüche mit dem folgenden zusätzlichen Merkmal:
a. Der Anodenstromkollektor (106) und/oder Kathodenstromkollektor (109) besteht aus Aluminium oder aus einer Aluminiumlegierung.

7. Energiespeicherelement nach einem der vorhergehenden Ansprüche mit mindestens einem der folgenden zusätzlichen Merkmale:
a. In dem freien Randstreifen (109b) des Kathodenstromkollektors (109) und/oder in dem freien Randstreifen (106b) des Anodenstromkollektors (106) ist die Oberfläche des Kathodenstromkollektors (109) und/oder des Anodenstromkollektors (106) mit einem Stützmaterial beschichtet, das thermisch beständiger als die damit beschichtete Oberfläche ist.
b. Bei dem nichtmetallischen Material handelt es sich um ein keramisches Material, ein glaskeramisches Material oder um ein Glas.
c. Bei dem keramischen Material handelt es sich um Aluminiumoxid (Al₂O₃), um Siliziumoxid, insbesondere um Siliziumdioxid, um Titanoxid (TiO₂), um Titannitrid (TiN), um Titanaluminiumnitrid (TiAlN) oder um Titancarbonitrid (TiCN).

8. Energiespeicherelement nach einem der Ansprüche 2 oder 4-7 mit mindestens einem der folgenden zusätzlichen Merkmale:
a. Es umfasst ein luft- und flüssigkeitsdicht verschlossenes Gehäuse, das ein metallisches, becherförmig ausgebildetes Gehäuseteil (101) mit dem Boden (101a) und einer endständigen kreisförmigen Öffnung sowie einen Deckel (102) mit einem kreisförmigen Rand (102a), welche die endständige kreisförmige Öffnung verschließt, aufweist.
b. In dem becherförmig ausgebildeten Gehäuseteil ist der Verbundkörper (104) in axialer Ausrichtung angeordnet, wobei die erste Stirnseite (104a) in Richtung des Deckels (102) und die zweite Stirnseite (104b) in Richtung des Bodens (101a) weist, gegebenenfalls unmittelbar mit dem Boden (101a) in Kontakt steht.
c. Es umfasst eine ringförmige Dichtung (103) aus einem elektrisch isolierenden Material, die den kreisförmigen Rand (102a) des Deckels (102) umschließt und das becherförmig ausgebildete Gehäuseteil (101) und den Deckel (102) elektrisch voneinander isoliert.
d. Das becherförmig ausgebildete Gehäuseteil (101) umfasst eine Innenseite (101d) und eine Außenseite (101e) und in axialer Abfolge den Boden (101a), einen Zentralabschnitt (101b) und einen Verschlussabschnitt (101c), wobei
- der Zentralabschnitt (101b) zylindrisch ausgebildet ist und in dem Zentralabschnitt (101b) der Wickelmantel (104c) des als Wickel ausgebildeten Verbundkörpers (104) mit der Innenseite (101d) des becherförmig ausgebildeten Gehäuseteils (101) in Kontakt steht, und
- in dem Verschlussabschnitt (101c) die ringförmige Dichtung (103) in einem Presskontakt mitdem Deckel (102) und der Innenseite des becherförmigausgebildeten Gehäuseteils (101) steht.
e. Der Zentralabschnitt (101b) und der Verschlussabschnitt (101c) sind durch eine Einbuchtung (111), welche die Außenseite (101e) des becherförmig ausgebildeten Gehäuseteils (101) ringförmig umläuft, getrennt.
f. Das Kontaktmetallblech (112) ist mit dem freien Randstreifen (106b) des aus der ersten endständigen Stirnseite (104a) austretenden Stromkollektors durch Verschweißung und mit dem Deckel (102) elektrisch, bevorzugt ebenfalls durch Verschweißung, verbunden.
g. Es umfasst mindestens ein Isolierelement (150; 160; 170; 180) aus einem elektrisch isolierenden Material, das das Kontaktmetallblech (112) und/oder den freien Randstreifen (106b, 109b) des aus der Stirnseite (104a) austretenden Stromkollektors (106, 109) und/oder einen an dem Kontaktmetallblech (112) fixierten separaten elektrischen Leiter (133) vor einem unmittelbaren Kontakt mit der Innenseite (101d) des becherförmig ausgebildeten Gehäuseteils (101) schützt, insbesondere im Bereich der Einbuchtung (111).

9. Energiespeicherelement nach einem der Ansprüche 1 bis 7 mit mindestens einem der folgenden zusätzlichen Merkmale:
a. Es umfasst ein luft- und flüssigkeitsdicht verschlossenes Gehäuse, das ein metallisches, becherförmig ausgebildetes Gehäuseteil (101) mit einem Boden (101a) und einer endständigen Öffnung sowie einen Deckel (102), welche die endständige Öffnung verschließt, aufweist.
b. Der Deckel (102) umfasst eine metallische Deckelplatte (102a) und einen Anschlusspol (102b), der durch eine Durchbrechung in der Deckelplatte (102) geführt und gegenüber der Deckelplatte (102) elektrisch isoliert ist,
c. In dem becherförmig ausgebildeten Gehäuseteil ist der Verbundkörper (104) angeordnet, wobei dieser mit einer Seite (104a) in Richtung des Deckels (102) und mit einerzweiten Seite (104b) in Richtung des Bodens (101a) weist, gegebenenfalls unmittelbar mit dem Boden (101a) in Kontakt steht.
d. Der die Kathode (108) und die Anode (105) sind derart ausgebildet und/oder innerhalb des Verbundkörpers (104) derart zueinander angeordnet, dass der freie Randstreifen (109b) des Kathodenstromkollektors (109) aus der Seite (104b) des Verbundkörpers (104) und derfreie Randstreifen (106b) des Anodenstromkollektors (106) aus einer Seite (104a) des Verbundkörpers (104) austritt, und
e. Das Kontaktmetallblech (112) sitzt unmittelbar auf dem freien Randstreifen eines der aus einer der Seiten des Verbundkörpers austretenden Stromkollektoren auf und ist mit diesem durch Verschweißung verbunden.
f. Das Kontaktmetallblech (112) ist entweder mit dem durch die Durchbrechung in der Deckelplatte (102a) geführten Anschlusspol (102b) elektrisch verbunden, vorzugsweise unmittelbar mit dem Anschlusspol (102b) unmittelbar verschweißt, oder der Anschlusspol (102b) ist ein Teil des Kontaktmetallblechs (112).
g. Der Anschlusspol (102b) ist durch eine ausgehärtete Vergussmasse (113) aus einem elektrisch isolierenden Kunststoffmaterial von der Deckelplatte (102) elektrisch isoliert.

10. Energiespeicherelement nach Anspruch 9 mit dem folgenden zusätzlichen Merkmal:
a. Der nicht mit dem Kontaktmetallblech (112) in unmittelbarem Kontakt stehende Randstreifen des Kathodenstromkollektors (109) oder des Anodenstromkollektors (106) ist elektrisch mit dem Gehäuseboden (101a) verbunden, bevorzugt unmittelbar an den Gehäuseboden (101a) geschweißt.

11. Energiespeicherelement nach einem der Ansprüche 9 oder 10 mit mindestens einem derfolgenden zusätzlichen Merkmale:
a. Zwischen der Deckelplatte (102) und dem Kontaktmetallblech (112) befindetsich ein ringförmiger Spalt, der mit der Vergussmasse (113) befüllt ist.
b. Der ringförmige Spalt wird radial nach außen durch eine O-Ring-förmige Isolierscheibe (177) aus einem elektrisch isolierenden Kunststoffmaterial begrenzt.

12. Energiespeicherelement nach einem der Ansprüche 9 bis 11 mit den folgenden zusätzlichen Merkmalen:
a. der Gehäuseboden (101a) des becherförmig ausgebildeten Gehäuseteils (101) weist eine Primärsicherung gegen internen Überdruck in Form einer Durchbrechung (155), die mittels einer metallischen Membran (114) verschlossen ist, auf,
b. der Gehäuseboden (101a) des becherförmig ausgebildeten Gehäuseteils (101) weist eine Sekundärsicherung gegen internen Überdruck in Form mindestens einer Nut (166) auf seiner Innenseite oderseiner Außenseite auf.

13. Batterie, umfassend mindestens zwei Energiespeicherelemente nach einem der vorhergehenden Ansprüche, die parallel und oder in Serie geschaltet sind.

14. Batterie nach Anspruch 14, **dadurch gekennzeichnet, dass** sie einen Nennspannung von 12V oder von 24V aufweist.
